(19) Europäisches Patentamt
European Patent Office
Office européen des brevets

(11) EP 4 787 662 A1

(12) **EUROPEAN PATENT APPLICATION**
published in accordance with Art. 153(4) EPC

(43) Date of publication:
05.08.2026 Bulletin 2026/32

(21) Application number: 24871029.5

(22) Date of filing: 27.09.2024

(51) International Patent Classification (IPC):
H02J 7/00 (2026.01)    H01M 10/44 (2006.01)

(52) Cooperative Patent Classification (CPC):
H02J 7/84; H01M 10/44; H02J 7/00; H02J 7/56;
H02J 7/663; H02J 7/82; H02J 7/96

(86) International application number:
PCT/CN2024/121959

(87) International publication number:
WO 2025/067494 (03.04.2025 Gazette 2025/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 28.09.2023 CN 202311275716
05.06.2024 CN 202410728047

(71) Applicants:
• Shanghai Sigeyuan Intelligent Technology Co.,
Ltd.
Shanghai 201112 (CN)

• Sigenergy Technology Co., Ltd.
Shanghai 200131 (CN)

(72) Inventors:
• CHEN, Lei
Shanghai 201112 (CN)
• ZHOU, Meijuan
Shanghai 201112 (CN)
• CHEN, Cheng
Shanghai 201112 (CN)

(74) Representative: Di Bernardo, Antonio et al
Thinx S.r.l.
P.le Luigi Cadorna, 10
20123 Milano (IT)

(54) **BATTERY CLUSTER BALANCING CONTROL METHOD**

(57) The present disclosure discloses a balancing control method, apparatus, and system for a battery cluster, and belongs to the field of energy storage systems. The balancing control method for the battery cluster includes: obtaining at least one of a first actual state of charge and an actual state of health of each battery cell, and a second actual state of charge of each PACK; controlling, by a first balancing module based on the at least one of the first actual state of charge and the actual state of health, at least one of state of charge balancing and state of health balancing of each battery cell; and controlling, by a second balancing module based on the second actual state of charge, state of charge balancing of the PACK.

Obtaining at least one of a first actual state of charge and an actual state of health of each of the at least one battery cell, and a second actual state of charge of each of the at least one PACK — 110

Controlling, by a first balancing module based on at least one of the first actual state of charge and the actual state of health, at least one of state of charge balancing and state of health balancing of each battery cell — 120

Controlling, by a second balancing module based on the second actual state of charge, state of charge balancing of the PACK — 130

FIG. 1

**Description**

**CROSS-REFERENCE TO RELATED APPLICATIONS**

This application claims priorities to Chinese Patent Applications No. 202410728047.3, filed on June 5, 2024, and No. 202311275716.8, filed on September 28, 2023, the entire contents of which are incorporated herein by reference.

**FIELD**

The present disclosure relates to the field of energy storage systems, and in particular, to a balancing control method for a battery cluster.

**BACKGROUND**

With the development of energy storage technology, direct current bus with voltages ranging from 1000V to 1500V are gradually becoming the industry mainstream. However, battery cells have relatively low voltages, requiring an increasing quantity of battery strings to satisfy requirements of a direct current bus voltage. A quantity of intra-cluster PACKs in battery clusters and a quantity of battery cells in each PACK are both on the rise. However, the increase in the quantity of battery strings further causes a buckets effect that expands a difference in battery consistency.

In the related art, mounting personnel and operation and maintenance personnel need to spend a significant quantity of time on charging and discharging the PACK separately to satisfy battery consistency requirements for the battery cluster. Meanwhile, potential safety hazards also occur in these manual charging and discharging operations, as any slight mistake can cause a short circuit in the PACK, potentially leading to thermal runaway in an energy storage system.

**SUMMARY**

The present disclosure aims to at least solve one of the technical problems existing in the prior art. To this end, the present disclosure provides a balancing control method for a battery cluster, which can effectively ensure normal and efficient operation of the battery cluster and have high reliability while reducing costs and complexity of a system.

In a first aspect, the present disclosure provides a balancing control method for a battery cluster. The battery cluster includes at least one PACK. Each of the at least one PACK includes at least one battery cell. The method includes: obtaining at least one of a first actual state of charge and an actual state of health of each of the at least one battery cell, and a second actual state of charge of each of the at least one PACK; controlling, by a first balancing module based on at least one of the first actual state of charge and the actual state of health, at least one of state of charge balancing and state of health balancing of each battery cell; and controlling, by a second balancing module based on the second actual state of charge, state of charge balancing of the PACK. The first balancing module and the second balancing module are both connected to the PACK.

According to the balancing control method for the battery cluster of the present disclosure, by distinguishing different balancing purposes, a first balancing module for balancing differences of the battery cell and a second balancing module for balancing differences of the PACK are respectively provided, which can effectively ensure the normal and efficient operation of the battery cluster and improve battery consistency while reducing the costs and the complexity of the system, thereby reducing a buckets effect. In addition, this arrangement has the high reliability.

According to an embodiment of the present disclosure, the first balancing module includes a first sub-balancing module. The controlling, by the first balancing module based on at least one of the first actual state of charge and the actual state of health, at least one of the state of charge balancing and the state of health balancing of each of the at least one battery cell includes: in response to a difference between a first actual state of charge of a first target battery cell among the at least one battery cell and a first actual state of charge of a first lowest cell among the at least one battery cell being greater than a first predetermined value, adjusting the first sub-balancing module to perform state of charge balancing on the first target battery cell. The first lowest cell is a battery cell with a lowest first actual state of charge among the at least one battery cell.

According to an embodiment of the present disclosure, the first sub-balancing module includes at least one first switch and a first resistor. The at least one first switch is connected in parallel with the at least one battery cell in a one-to-one correspondence, and the first resistor is disposed between each of the at least one first switch and each of the at least one battery cell connected in parallel with the at least one first switch. The adjusting the first sub-balancing module to perform state of charge balancing on the first target battery cell includes: controlling a first switch connected in parallel with the first target battery cell to be on; and in response to the difference between the first actual state of charge of the first target battery cell and the first actual state of charge of the first lowest cell being less than a second predetermined value, controlling the first switch connected in parallel with the first target battery cell to be off. The second predetermined value is less than the first predetermined value.

According to an embodiment of the present disclosure, the first balancing module includes a second sub-balancing module. The controlling, by the first balancing module based on at least one of the first actual state of charge and the actual state of health, at least one of the state of charge balancing and the state of health balancing of each of the at least one battery cell includes: in response to a difference between an actual state of health of a first highest cell and an actual state of health of a second lowest cell being greater than a third predetermined value, adjusting the second sub-balancing module to perform state of health balancing on the second lowest cell. The first highest cell is a battery cell with a highest actual state of health among the at least one battery cell, and the second lowest cell is a battery cell with a lowest actual state of health among the at least one battery cell.

According to an embodiment of the present disclosure, the second sub-balancing module includes at least one electromagnetic induction module arranged in a one-to-one correspondence with the at least one battery cell. Each of the at least one electromagnetic induction module has a first end connected to a positive electrode of the battery cell, a second end connected to a negative electrode of the battery cell via a second resistor and a second switch that are connected in series, a third end connected to the positive electrode of the battery cell, and a fourth end connected to the negative electrode of the battery cell via a third resistor and a third switch that are connected in series. The adjusting the second sub-balancing module to perform state of health balancing on the second lowest cell includes: sequentially controlling the second switch and the third switch that correspond to the second lowest cell to be on.

According to an embodiment of the present disclosure, the controlling, by the second balancing module based on the second actual state of charge, the state of charge balancing of the PACK includes: in response to a difference between a second actual state of charge of a first target PACK among the at least one PACK and a second actual state of charge of a lowest PACK among the at least one PACK being greater than a fourth predetermined value, adjusting the second balancing module to perform state of charge balancing on the first target PACK. The lowest PACK is a PACK with a lowest second actual state of charge among the at least one PACK.

According to an embodiment of the present disclosure, the second balancing module includes a fourth resistor and a fourth switch that are connected in series. The fourth resistor and the fourth switch that are connected in series are connected in parallel with the PACK. The adjusting the second balancing module to perform state of charge balancing on the first target PACK includes: controlling the fourth switch corresponding to the first target PACK to be on; and controlling the fourth switch corresponding to the first target PACK to be off subsequent to a first target time length.

According to an embodiment of the present disclosure, the first target time length is determined by: calculating the first target time length based on the second actual state of charge of the first target PACK, the second actual state of charge of the lowest PACK, a battery nominal capacity, a battery aging degree of the first target PACK, a voltage across the first target PACK, and resistance of the fourth resistor.

According to an embodiment of the present disclosure, the balancing control method for the battery cluster further includes: in response to a cell voltage of the at least one battery cell in the first target PACK being less than a sixth predetermined value, controlling a branch circuit where the fourth resistor and the fourth switch are located to be off. The fourth resistor and the fourth switch are connected in series and connected in parallel with the first target PACK.

According to an embodiment of the present disclosure, the balancing control method for the battery cluster further includes: in response to an actual temperature of the second balancing module being greater than a fifth predetermined value, performing a heat dissipation operation on the second balancing module.

In a second aspect, the present disclosure provides a balancing control apparatus for a battery cluster. The battery cluster includes at least one PACK. Each of the at least one PACK includes at least one battery cell. The apparatus includes: a first processing module configured to obtain at least one of a first actual state of charge and an actual state of health of each of the at least one battery cell, and a second actual state of charge of each of the at least one PACK; a second processing module configured to control, by a first balancing module based on at least one of the first actual state of charge and the actual state of health, at least one of state of charge balancing and state of health balancing of each battery cell; and a third processing module configured to control, by a second balancing module based on the second actual state of charge, state of charge balancing of the PACK. The first balancing module and the second balancing module are both connected to the PACK.

According to the balancing control apparatus for the battery cluster of the present disclosure, by distinguishing different balancing purposes, the first balancing module for balancing the differences of the battery cell and the second balancing module for balancing the differences of the PACK are respectively provided, which can effectively ensure the normal and efficient operation of the battery cluster and have the high reliability, while reducing the costs and the complexity of the system.

In a third aspect, the present disclosure provides a system based on the balancing control method for the battery cluster as described according to the first aspect. The system includes: a battery management unit; a first balancing module connected to the battery management unit and the PACK; and a second balancing module connected to the battery management unit and the PACK.

In a fourth aspect, the present disclosure provides a non-transitory computer-readable storage medium having a computer program stored thereon. The computer program, when executed by a processor, implements the balancing control method for the battery cluster as described according to the first aspect.

In a fifth aspect, the present disclosure provides a computer program product, including a computer program. The computer program, when executed by a processor, implements the balancing control method for the battery cluster as described according to the first aspect.

In a sixth aspect, the present disclosure further provides an adjustment method for an energy storage system. The method is implemented to perform balancing control on the energy storage system. The energy storage system includes at least two battery clusters. Each of the at least two battery clusters includes at least one cell. The method includes: determining whether the energy storage system is in a voltage plateau region or a voltage non-plateau region; in response to the energy storage system being in the voltage plateau region, using a maximum real-time SOC or a minimum real-time SOC of all battery clusters as a basis for determining whether balancing is required, and using the battery clusters as balancing objects; and in response to the energy storage system being in the voltage non-plateau region, using a maximum cell voltage or a minimum cell voltage of all the battery clusters as a basis for determining whether the balancing is required, and using the battery clusters as the balancing objects.

According to one of implementations of the present disclosure, the adjustment method for the energy storage system further includes: obtaining an OCV-SOC curve of the energy storage system, and dividing the voltage plateau region and the voltage non-plateau region according to a slope of the OCV-SOC curve.

According to one of the implementations of the present disclosure, endpoint values of two ends of the voltage plateau region are SOCtag1 and SOCtag2, where 0<SOCtag1 < SOCtag2<1, SOCtag1 represents a starting SOC value of the voltage plateau region, and SOCtag2 represents an ending SOC value of the voltage plateau region.

According to one of the implementations of the present disclosure, the adjustment method for the energy storage system further includes: detecting a cell aging state of the energy storage system, updating the OCV-SOC curve of the energy storage system according to the cell aging state, and dividing the voltage plateau region and the voltage non-plateau region according to a slope of the updated OCV-SOC curve.

According to one of the implementations of the present disclosure, the adjustment method for the energy storage system further includes: obtaining a charging and discharging state of the energy storage system, and performing an inter-cluster balancing adjustment on the energy storage system according to the charging and discharging state of the energy storage system.

According to one of the implementations of the present disclosure, the maximum real-time SOC of all the battery clusters, i.e., SOCmax, enters a range from SOCtag1 to SOCtag2 when the energy storage system is in a charging process, where SOCtag1≤SOCmax≤SOCtag2. An adjustment current of each battery cluster is calculated by the following formula:

$$I_i = \min\left\{x_i * I_{total}, I_{i\,maximum\ allowable\ charging\ current}\right\}$$

where $I_i$· represents a target current value of each battery $x_i$ cluster, represents a cluster-current distribution weight coefficient of each battery cluster, and $I_{total}$ represents a total current inputted to the energy storage system; and

the cluster-current distribution weight coefficient $X_i$ is calculated by the following formula:

$$x_i = \frac{(Soc_{tag2} - MaxSoc_i) * Cap_i}{\sum_i^n((Soc_{tag2} - MaxSoc_i) * Cap_i)}$$

where **MaxSoc_i** represents a maximum real-time SOC of each battery cluster, and **Cap_i** represents a nominal capacity of each battery cluster at a current temperature.

According to one of the implementations of the present disclosure, the target current value $I_i$· of each battery cluster is calculated by the following formula:

$$I_i = \min\left\{x_i * I_{total;}^t, I_{i\,maximum\,allowable\,charging\,current}\right\}$$

where $I_{total}^t$ represents a total current inputted to the energy storage system at a current moment; and
the total current inputted to the energy storage system at the current moment is calculated by the following formula:

$$I_{total}^t = \Sigma I_i^{t-1}$$

where $I_i^{t-1}$ represents an adjusted target current value of each battery cluster at a previous moment.

According to one of the implementations of the present disclosure, the adjustment method for the energy storage system further includes: when the energy storage system is in a charging process, and when the maximum real-time SOC of all the battery clusters, i.e., SOCmax, is greater than SOCtag2, where SOCtag2<SOCmax<1, comparing a maximum cell voltage of each battery cluster and an average value of the maximum cell voltages of all the battery clusters; and in response to a difference between the maximum cell voltage of a battery cluster and the average value of the maximum cell voltages of all the battery clusters exceeding a predetermined voltage difference threshold, performing a current adjustment on the battery cluster.

According to one of the implementations of the present disclosure, in a process of performing the current adjustment on the battery cluster as responding to the difference between the maximum cell voltage of the battery cluster and the average value of the maximum cell voltages of all the battery clusters exceeding the predetermined voltage difference threshold, an adjustment current of the battery cluster is calculated by the following formula:

$$MaxVolt_{avg} = \frac{\sum MaxVolt_i}{i}$$

$$err_t^i = MaxVolt_t^i - MaxVolt_{avg}$$

$$\delta I_t^i = K_p err_t^i + K_i \int err_t^i + K_d \frac{derr_t^i}{dt}$$

$$I_t^i = \min\{I_{t-1}^i - \delta I_t^i, I_{i\ maximum\ allowable\ charging\ current}\}$$

where $MaxVolt_i$ represents the maximum cell voltage of each battery cluster, i represents a quantity of battery clusters, $MaxVolt_{avg}$ represents the average voltage of the maximum cell voltages of all the battery clusters, $\delta I_t^i$ represents the amount of current needing to be adjusted in a current cycle, $K_p$ represents a proportional adjustment coefficient, $K_i$ represents an integral adjustment coefficient, $K_d$ represents a differential adjustment coefficient, $I_{t-1}^i$ represents a target current value in a previous cycle, and $I_t^i$ represents a target current value in the current cycle.

According to one of the implementations of the present disclosure, an integral adjustment term $\int err_t^i$ is removed during calculation of the amount of current needing to be adjusted $\delta I_t^i$ in the current cycle under any one of the following conditions including: the maximum cell voltage of the adjusted battery cluster being less than a sum of an average voltage of maximum voltages of all the battery clusters and the predetermined voltage difference threshold; a switch in a current operation state; an integration time for calculating $\delta I_t^i$ exceeding a predetermined adjustment step length; and a difference between an actual current value in the current cycle and the target current value $I_{t-1}^i$ in the previous cycle exceeding a predetermined range.

According to one of the implementations of the present disclosure, the minimum real-time SOC of all the battery clusters, i.e., SOCmin, enters a range from SOCtag1 to SOCtag2 when the energy storage system is in a discharging process, where SOCtag1≤SOCmin≤SOCtag2. An adjustment current of each battery cluster is calculated by the following formula:

$$I_i = \min\{x_i * I_{total}^t, I_{i\ maximum\ allowable\ discharging\ current}\}$$

where $I_i$ represents a target current value of each battery cluster $x_i$, represents a cluster-current distribution weight coefficient of each battery cluster, and $I_{total}^t$ represents a total current outputted outwards by the energy storage system to an external load; and

the cluster-current distribution weight coefficient $x_i$ s calculated by the following formula:

$$x_i = \frac{(MinSoc_i - Soc_{tag1}) * Cap_i}{\sum_i^n ((MinSoc_i - Soc_{tag1}) * Cap_i)}$$

where $MinSoc_i \cdot$ represents a minimum real-time SOC of each battery cluster, and $Cap_i$ represents a nominal capacity of each battery cluster at a current temperature.

According to one of the implementations of the present disclosure, the target current value $I_i \cdot$ of each battery cluster is calculated by the following formula:

$$I_i = \mathbf{mi\,n}\{x_i * I_{total}^t, I_{i\ maximum\ allowable\ discharging\ current}\}$$

where $I_{total}^t$ represents a total current outputted by the energy storage system to an external load; and

the total current inputted to the energy storage system at a current moment is calculated by the following formula:

$$I_{total}^t = \Sigma I_i^{t-1}$$

where $\cdot I_i^{t-1}$ represents an adjusted target current value of each battery cluster at a previous moment.

According to one of the implementations of the present disclosure, the adjustment method for the energy storage system further includes: when the energy storage system is in a discharging process, and when the minimum real-time SOC of all the battery clusters, i.e., SOCmin, is less than SOCtag1, where 0<SaCmin<SOCtag1, comparing a minimum cell voltage of each battery cluster and an average value of the minimum cell voltages of all the battery clusters; and in response to a difference between a minimum cell voltage of a battery cluster and the average value of the minimum cell voltages of all the battery clusters exceeding a predetermined voltage difference threshold, performing a current adjustment on the battery cluster.

According to one of the implementations of the present disclosure, in a process of performing the adjustment current of the battery cluster as responding to the difference between the minimum cell voltage of the battery cluster and the average value of the minimum cell voltages of all the battery clusters exceeding the predetermined voltage difference threshold, an adjustment current of the battery cluster is calculated by the following formula:

$$MinVolt_{avg} = \frac{\sum MinVolt_i}{i}$$

$$err_t^i = MinVolt_{avg} - MinVolt_t^i$$

$$\delta I_t^i = K_p err_t^i + K_i \int err_t^i + K_d \frac{derr_t^i}{dt}$$

$$I_t^i = min\{I_{t-1}^i - \delta I_t^i, I_{i\ maximum\ allowable\ discharging\ current}\}$$

where $MinVolt_i$ represents the minimum cell voltage of each battery cluster, i represents a quantity of battery clusters, $MinVolt_{avg}$ represents the average voltage of the minimum cell voltages of all the battery clusters, $\delta I_t^i$ represents the amount of current needing to be adjusted in a current cycle, $K_p \cdot$ represents a proportional adjustment coefficient, $K_i$ represents an integral adjustment coefficient, $K_d \cdot$ represents a differential adjustment coefficient, $I_{t-1}^i$ represents a target current value in a previous cycle, and $I_t^i$ represents a target current value in the current cycle.

According to one of the implementations of the present disclosure, an integral adjustment term $\int err_t^i$ is removed during calculation of the amount of current $\delta I_t^i$ needing to be adjusted in the current cycle under any one of the following conditions including: the minimum cell voltage of the adjusted battery cluster being higher than a difference between an average voltage of minimum voltages of all the battery clusters and the predetermined voltage difference threshold; a switch in a current operation state; an integration time for calculating $\delta I_t^i$ exceeding a predetermined adjustment step length; and a difference between an actual current value in the current cycle and the target current value $I_{t-1}^i$ in the previous cycle exceeding a predetermined range.

In a seventh aspect, the present disclosure further provides a computer medium executed with a data processing device. The data processing device has a processor including program code. The processor, when executing the program code, executes the balancing control method for the energy storage battery as described above.

In an eighth aspect, the present disclosure further provides an energy storage system, including a battery management unit and at least two battery clusters. The battery management unit is configured to execute the adjustment method for the energy storage system as described above, to perform a balancing adjustment on the at least two battery clusters in the energy storage system.

In a ninth aspect, the present disclosure further provides a power generation system. The power generation system includes an energy storage system and a central control unit. The central control unit is configured to execute the adjustment method for the energy storage system as described above, to perform a balancing adjustment on a battery cluster in the energy storage system.

In a tenth aspect, the present disclosure further provides a current sharing control method for an energy storage battery. The method is implemented to perform current sharing control on a plurality of groups of battery packs. Each of the plurality of groups of battery packs is connected in parallel to form a battery group. The method includes: step S1 of reading a capacity Ci, a battery state of health parameter SOHi, and a battery state of charge parameter SOCi of each battery pack i; step S3 of determining a discharging current Current(sys) required by an electrical load connected to the battery group; step S5 of calculating a proposed output current Current(i) of each battery pack according to the capacity Ci, the battery state of health parameter SOHi, the battery state of charge parameter SOCi of each battery pack i, and the discharging current Current(sys) required by the electrical load connected to the battery group through a specific calculation formula as follows:

$$Current(i) = \frac{(SOCi \times SOHi \times Ci)}{\sum_{i=1}^{N} (SOCi \times SOHi \times Ci)} \times Current(sys)$$

; and
step S7 of controlling an output current of each battery pack according to the calculated proposed output current Current(i) of each battery pack.

According to one of the implementations of the present disclosure, subsequent to collecting an internal temperature Ti of each battery pack in step S1, configuring a temperature threshold coefficient Tavg, and completing calculation of the proposed output current Current(i) of each battery pack, the method further includes: forming an output control current Current'(i) through a secondary adjustment according to the internal temperature Ti of the battery pack and the temperature threshold coefficient Tavg.

According to one of the implementations of the present disclosure, the current sharing control method for the energy storage battery further includes: monitoring the internal temperature change of each battery pack; and in response to a temperature change value of a predetermined battery pack being greater than or equal to a temperature difference threshold t, calculating and adjusting the output current of the battery pack.

According to one of the implementations of the present disclosure, the current sharing control method for the energy storage battery further includes: reading a maximum internal temperature Tmax and a minimum internal temperature Tmin of the battery pack collected during monitoring, a temperature change value of the battery pack being Tmax-Tmin.

According to one of the implementations of the present disclosure, the temperature difference threshold t ranges from 2°C to 10°C.

According to one of the implementations of the present disclosure, in a process of forming the output control current Current'(i) through the secondary adjustment according to the internal temperature Ti of the battery pack and the temperature threshold coefficient Tavg, a calculation formula of the output control current Current'(i) is as follows:

$$\mathbf{Current'(i) = \left(1 - \frac{T_i - T_{avg}}{T_{avg}}\right) \times Current(i)}$$

The temperature threshold coefficient Tavg is an average value of temperatures of battery packs, i.e.,

$$\mathbf{Tavg = \frac{\sum_{i=1}^{N} Ti}{N}}$$

According to one of the implementations of the present disclosure, in step S7, the output current of each battery pack is controlled by adjusting internal resistance of the battery pack or by adjusting an output voltage of the battery pack.

According to one of the implementations of the present disclosure, the output voltage of the battery pack is adjusted by performing voltage conversion within each battery pack.

According to one of the implementations of the present disclosure, step S1 further includes reading a real-time capacity Qi and maximum allowable output power Pi of each battery pack i, and step S3 further includes determining power P(sys) required by the electrical load connected to the battery group. The method further includes step S4 of comparing the real-time capacity Qi of each battery pack i, discharging a battery pack with a large real-time capacity on the premise of satisfying a power demand for the electrical load, and calculating the proposed output current Current(i) of each battery pack subsequent to the real-time capacity of each battery pack is balanced.

According to one of the implementations of the present disclosure, step S4 further includes: sorting the battery packs in descending order according to the real-time capacities of the battery packs, and respectively controlling the battery packs to successively output current in a state lower than or equal to the maximum allowable output power according to the sorted order, until total output power reaches the power P (sys) required by the electrical load.

In an eleventh aspect, the present disclosure further provides a computer medium executed with a data processing device. The data processing device has a processor including program code. The processor, when executing the program code, executes the current sharing control method for the energy storage battery as described above.

In a twelfth aspect, the present disclosure further provides a current sharing control system for an energy storage battery. The energy storage battery includes a plurality of groups of battery packs connected in parallel. The plurality of groups of battery packs are connected to an energy storage converter after connected in parallel. The energy storage converter has an output end connected to an electrical load for supplying power to the electrical load. Each battery pack is internally provided with a direct current conversion module. The direct current conversion module is connected to an output end of the battery pack and the energy storage converter. The energy storage converter is configured to determine a proposed output current Current(i) according to the current sharing control method for the energy storage battery as described above and control an output voltage of the direct current conversion module according to a proposed output current Current(i).

In a thirteenth aspect, the present disclosure further provides a current sharing control system for an energy storage battery. The energy storage battery includes a plurality of groups of battery packs connected in parallel. The plurality of groups of battery packs are connected to an energy storage converter after connected in parallel. The energy storage converter has an output end connected to an electrical load for supplying power to the electrical load. Each battery pack is internally provided with a direct current conversion module and a temperature sensor. The direct current conversion module is connected to an output end of the battery pack and the energy storage converter, and a data output end of the temperature sensor is connected to the direct current conversion module in the battery pack. The energy storage converter is configured to determine an output current Current'(i) according to the current sharing control method for the energy storage battery as described above and control an output voltage of the direct current conversion module according to a proposed output current Current(i).

## BRIEF DESCRIPTION OF THE DRAWINGS

FIG. 1 is a first schematic flowchart illustrating a balancing control method for a battery cluster provided according to an embodiment of the present disclosure.
FIG. 2 is a second schematic flowchart illustrating a balancing control method for a battery cluster provided according to an embodiment of the present disclosure.
FIG. 3 is a third schematic flowchart illustrating a balancing control method for a battery cluster provided according to an embodiment of the present disclosure.
FIG. 4 is a fourth schematic flowchart illustrating a balancing control method for a battery cluster provided according to an embodiment of the present disclosure.

FIG. 5 is a first schematic structural diagram of a system based on the balancing control method for the battery cluster provided according to an embodiment of the present disclosure.

FIG. 6 is a second schematic structural diagram of a system based on the balancing control method for the battery cluster provided according to an embodiment of the present disclosure.

FIG. 7 is a third schematic structural diagram of a system based on the balancing control method for the battery cluster provided according to an embodiment of the present disclosure.

FIG. 8 is a fourth schematic structural diagram of a system based on the balancing control method for the battery cluster provided according to an embodiment of the present disclosure.

FIG. 9 is a fifth schematic structural diagram of a system based on the balancing control method for the battery cluster provided according to an embodiment of the present disclosure.

FIG. 10 is a schematic structural diagram of a balancing control apparatus for a battery cluster provided according to an embodiment of the present disclosure.

FIG. 11 is a schematic structural diagram of an electronic device provided according to an embodiment of the present disclosure.

FIG. 12 is an OCV-SOC curve of an energy storage system provided according to an implementation of the present disclosure.

FIG. 13 is a schematic diagram of a determination process of a voltage plateau region and an endpoint value of an energy storage system provided according to an implementation of the present disclosure.

FIG. 14 is a schematic diagram illustrating an adjustment method for an energy storage system provided according to an implementation of the present disclosure.

FIG. 15 is a schematic diagram illustrating an adjustment method for an energy storage system in a charging state provided according to another implementation of the present disclosure.

FIG. 16 is a schematic diagram illustrating an adjustment method for an energy storage system in a charging state provided according to yet another implementation of the present disclosure.

FIG. 17 is a schematic diagram illustrating an adjustment method for an energy storage system in a discharging state provided according to another implementation of the present disclosure.

FIG. 18 is a schematic diagram illustrating an adjustment method for an energy storage system in a discharging state provided according to yet another implementation of the present disclosure.

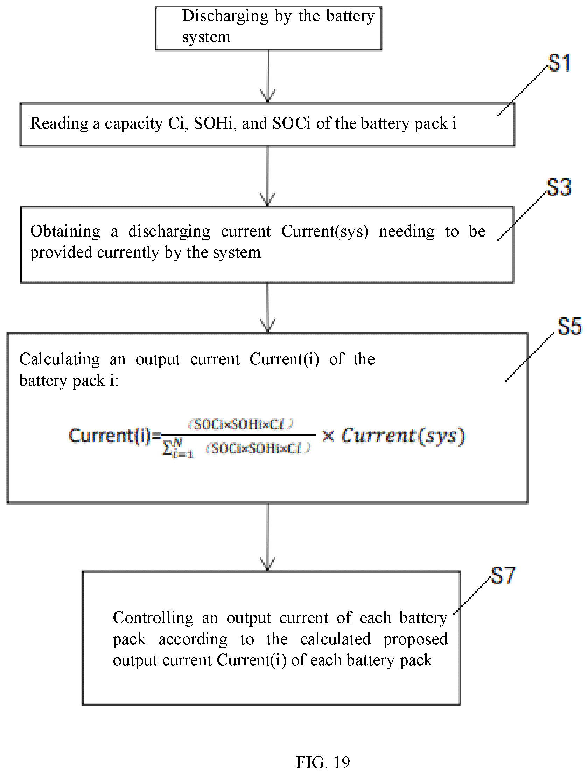

FIG. 19 is a schematic operation flowchart illustrating a current sharing control method for an energy storage battery provided according to an embodiment of the present disclosure.

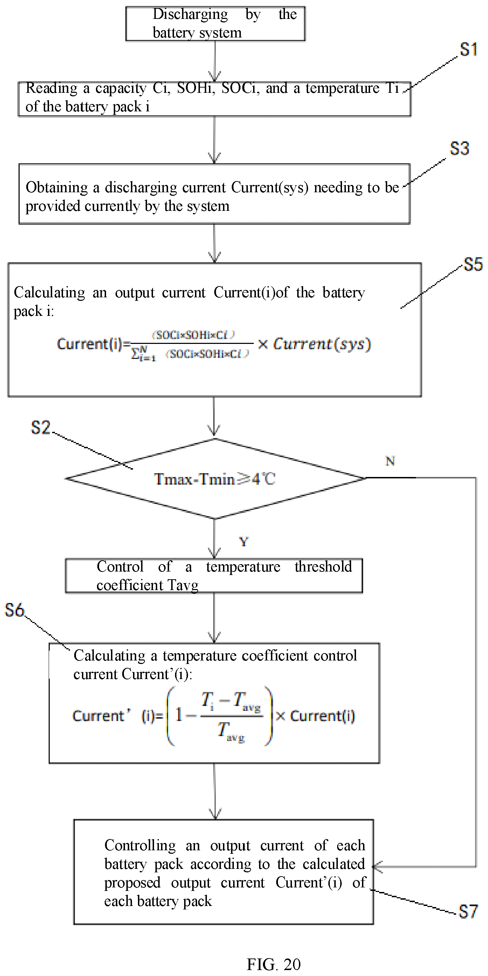

FIG. 20 is a schematic operation flowchart illustrating a current sharing control method for an energy storage battery provided according to another embodiment of the present disclosure.

FIG. 21 is a schematic operation flowchart illustrating a current sharing control method for an energy storage battery provided according to yet another embodiment of the present disclosure.

FIG. 22 is a schematic diagram of a frame structure of a current sharing control system for an energy storage battery provided according to an embodiment of the present disclosure.

FIG. 23 is a schematic diagram of a frame structure of a current sharing control system for an energy storage battery provided according to another embodiment of the present disclosure.

## DETAILED DESCRIPTION

Technical solutions according to embodiments of the present disclosure will be described clearly below in combination with accompanying drawings of the embodiments of the present disclosure. Obviously, the embodiments described below are a part of the embodiments of the present disclosure, rather than all embodiments of the present disclosure. On a basis of the embodiments of the present disclosure, all other embodiments obtained by those skilled in the art shall fall within the scope of the present disclosure.

Terms such as "first" and "second" in the specification and claims of the present disclosure are used only to distinguish between similar objects, rather than to describe a particular order or sequence. It should be understood that the data as used can be interchanged where appropriate, to enable the embodiments of the present disclosure described herein to be implemented in an order other than that illustrated or described herein. Also, the objects distinguished by the terms such as "first" and "second" are usually objects of the same type. The quantity of objects is not limited. For example, a first object may be one first object or a plurality of first objects. In addition, "and/or" throughout the specification and claims indicates at least one of the objects associated with "and/or". The character "/" generally indicates that the associated objects before and after the character are in an "or" relationship.

A balancing control method for a battery cluster, a balancing control apparatus for a battery cluster, an electrical system, and a readable storage medium provided according to the embodiments of the present disclosure will be described below in detail with reference to specific embodiments and application scenarios thereof in combination with the accompanying drawings.

The balancing control method for the battery cluster may be applied to a terminal and may be specifically executed by hardware or software in a terminal.

In the balancing control method for the battery cluster provided according to the embodiments of the present disclosure, an execution subject of the balancing control method for the battery cluster may be an electronic device or a functional module or a functional entity in the electronic device capable of implementing the balancing control method for the battery cluster. The electronic device mentioned in the embodiments of the present disclosure includes but is not limited to a mobile phone, a tablet computer, a computer, a camera, and a wearable device. The balancing control method for the battery cluster provided according to the embodiments of the present disclosure will be described below by taking the electronic device serving as the execution subject as an example.

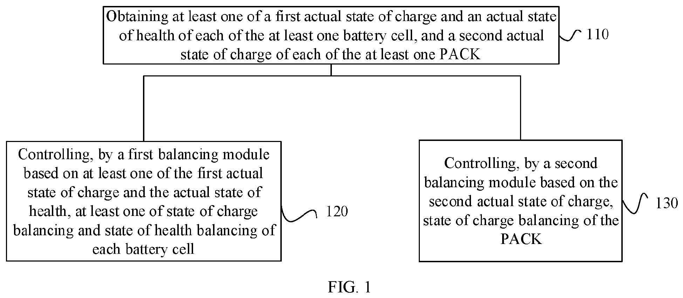

As illustrated in FIG. 1, the balancing control method for the battery cluster includes step 110, step 120, and step 130.

The battery cluster includes at least one PACK. Each of the at least one PACK includes at least one battery cell.

At step 110, at least one of a first actual state of charge and an actual state of health of each of the at least one battery cell, and a second actual state of charge of each of the at least one PACK are obtained.

In this step, the actual state of charge (SOC) is a ratio of a remaining battery capacity to a battery capacity.

The state of health (SOH) is a ratio of a battery current capacity to a factory capacity in percent.

At step 120, at least one of state of charge balancing and state of health balancing of each of the at least one battery cell is controlled by a first balancing module based on at least one of the first actual state of charge and the actual state of health.

In this step, the first balancing module is used for controlling and adjusting the battery cell.

The first balancing module is configured to keep actual states of charge of battery cells in one PACK consistent, and/or to enable the battery cells in the one PACK to satisfy an end-of-life standard synchronously.

During actual execution, zero, one, or more battery cells on which the state of charge balancing or state of health balancing is performed may be provided, and balancing processing corresponding to each battery cell is independent of each other.

When performing the state of charge balancing, it is possible that passive resistance discharge may be performed on a battery cell with a high first actual state of charge in a passive balancing adjustment manner, for example, based on a level of the first actual state of charge of each battery cell.

When state of health balancing is performed, active energy transfer may be performed in an active balancing adjustment manner.

At step 130, state of charge balancing of the PACK is controlled by a second balancing module based on the second actual state of charge.

The first balancing module and the second balancing module are both connected to the PACK.

In this step, the second balancing module is used for controlling and adjusting the PACK.

The second balancing module is used for keeping actual states of charge of PACKs in one battery cluster consistent.

During actual execution, zero, one, or more PACKs on which the state of charge balancing is performed may be provided, and the state of charge balancing corresponding to each PACK is independent of each other.

In some embodiments, the second balancing module may perform state of charge balancing on the PACK by using active energy transfer, passive resistance discharge, a dynamic resistor, or in a manner of serving as a heat dissipation device corresponding to the PACK or the like, to perform energy transfer to one or more PACKs with a high second actual state of charge.

It should be noted that steps 120 and 130 of the present disclosure may be executed simultaneously without interfering with each other.

During research and development, the applicant found that in the related art, a DC/DC optimizer is often configured for a single PACK to achieve the balancing of the PACK. However, this method has low reliability and high cost, while reducing charging and discharging efficiency of an energy storage system.

In the present disclosure, by distinguishing different balancing purposes, a first balancing module for balancing differences of the battery cell and a second balancing module for balancing differences of the PACK are provided, respectively. It is also possible that the second balancing module is utilized for balancing the PACK during mounting and replacement of the PACK, while reducing costs and complexity of the system. The first balancing module may be used for balancing the battery cell during daily operation, effectively ensuring normal and efficient operation of the battery cluster and having high reliability.

With the balancing control method for the battery cluster provided according to the embodiments of the present disclosure, by distinguishing different balancing purposes, the first balancing module for balancing the differences of the battery cell and the second balancing module for balancing the differences of the PACK are respectively provided, which can effectively ensure the normal and efficient operation of the battery cluster and improve battery consistency, while reducing the costs and the complexity of the system, thereby reducing a buckets effect. In addition, this arrangement has the high reliability.

Specific implementations of SOC balancing of battery cell, SOH balancing of battery cell, and SOC balancing of PACK are described below.

First implementation of the SOC balancing of battery cell

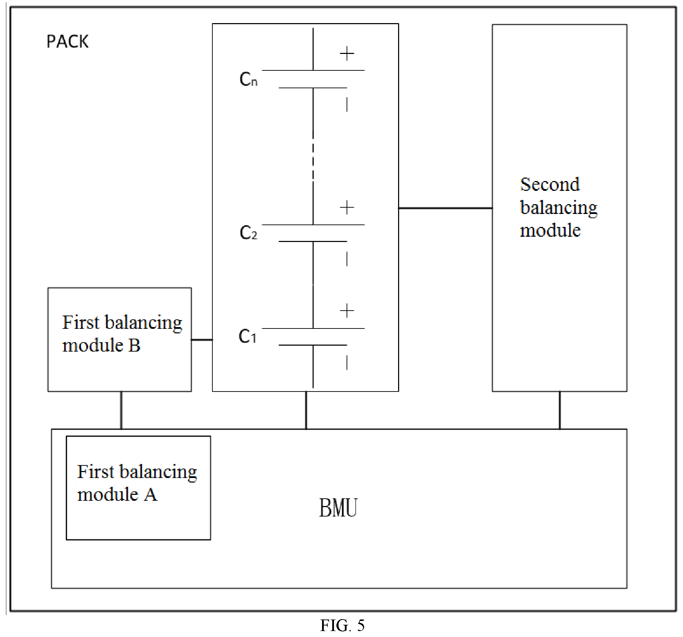

As illustrated in FIG. 5, in some embodiments, a first balancing module includes a first sub-balancing module, i.e., a first balancing module A illustrated in FIG. 5.

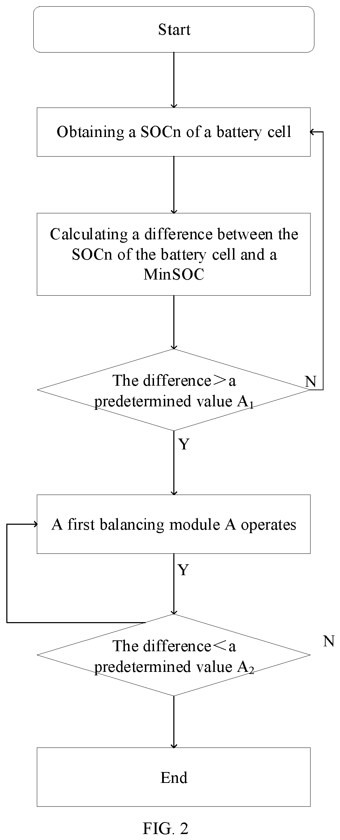

As illustrated in FIG. 2, the step 120 may include: in response to a difference between a first actual state of charge of a first target battery cell and a first actual state of charge of a first lowest cell in at least one battery cell being greater than a first predetermined value, adjusting the first sub-balancing module to perform state of charge balancing on the first target battery cell.

In this embodiment, one PACK corresponds to at least one first sub-balancing module, and the first sub-balancing module is configured to perform SOC balancing on each battery cell in the one PACK.

The first sub-balancing module may be integrated on a battery management unit (BMU).

The first sub-balancing module may use a passive balancing circuit or an active balancing circuit.

The first target battery cell may be any battery cell among all battery cells included in the one PACK.

One or more first target battery cells may be provided. In a case where a plurality of first target battery cells are provided, the first target battery cells are independent of each other to be performed the SOC balancing, with similar execution strategies.

A first lowest cell is a battery cell with a lowest first actual state of charge among all the battery cells in the one PACK.

The difference may be a difference value, a ratio, or the like, and the present disclosure is not limited thereto.

The first predetermined value may be self-defined by a user or determined based on factors such as a voltage sampling error, a current sampling error, a capacity difference of a single cell itself, and a SOC estimation error.

For example, when a SOC difference control target is 0.5%, the first predetermined value may be determined to be 0.5%. That is, in response to the difference between the first actual state of charge of the first target battery cell and the first actual state of charge of the first lowest cell exceeds the first predetermined value, it is determined that the first target battery cell has a high actual SOC and needs to perform discharging balancing, and the first sub-balancing module is activated to discharge the first target battery cell to reduce the actual SOC of the first target battery cell.

Of course, in other embodiments, it is also possible that the first predetermined value is set to other numerical values, such as 0.6% or 0.4%, and the present disclosure is not limited thereto.

By taking the passive balancing circuit as an example, the first sub-balancing module and its corresponding processing logic are described below.

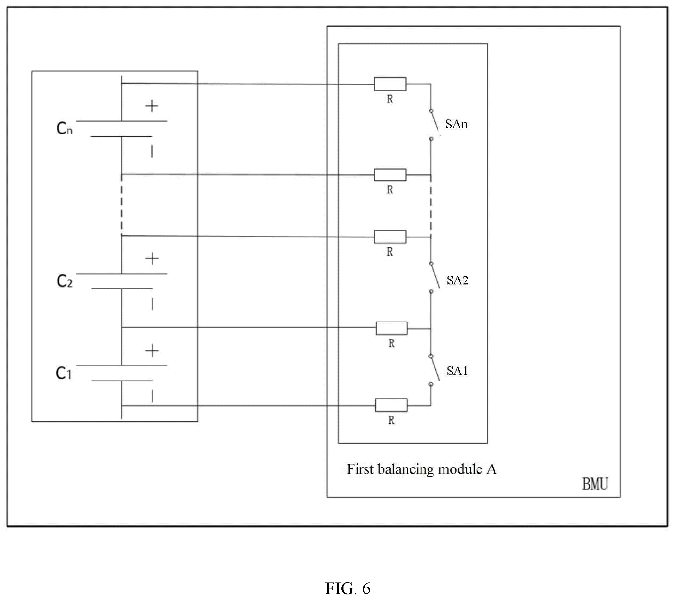

As illustrated in FIG. 6, in some embodiments, the first sub-balancing module includes at least one first switch and a first resistor. The at least one first switch is connected in parallel with the at least one battery cell in a one-to-one correspondence, and the first resistor is disposed between each of the at least one first switch and each of the at least one battery cell connected in parallel with the at least one first switch.

C1, C2, ..., and Cn are the plurality of battery cells included in the one PACK, and n is a positive integer.

The first resistor may be disposed between a positive electrode of the battery cell and the first switch, or between a negative electrode of the battery cell and the first switch, or between the positive electrode of the battery cell and the first switch and between the negative electrode of the battery cell and the first switch.

The first resistors have the same resistance.

When the first switch is on, a branch circuit where the first switch is located is on. A passage is formed by the battery cell corresponding to the first switch with the first switch and the first resistor, and the battery cell starts to discharge.

Continuing to refer to FIG. 2, the adjusting the first sub-balancing module to perform state of charge balancing on the first target battery cell may include: controlling a first switch connected in parallel with the first target battery cell to be on; and in response to the difference between the first actual state of charge of the first target battery cell and the first actual state of charge of the first lowest cell being less than a second predetermined value, controlling the first switch connected in parallel with the first target battery cell to be off. The second predetermined value is less than the first predetermined value.

In this embodiment, the second predetermined value should be less than the first predetermined value to avoid repeated on and off of the first switch corresponding to the battery cell due to jitter.

The second predetermined value may be self-defined by the user or determined based on the SOC difference control target.

Continuing to take the SOC difference control target being 0.5% as an example, the second predetermined value may be set to 0.5%-0.2%=0.3% based on a control target and a hysteresis value of 0.2%.

Of course, in other embodiments, it is also possible that the second predetermined value is set to other numerical values, such as 0.2% or 0.4%, and the present disclosure is not limited thereto.

For example, when CellSocn-MinCellSoc>A1, the BMU controls a circuit corresponding to the first sub-balancing module to balance a n-th battery cell Cn, i.e., the first switch Sn is on, where CellSocn is a first actual state of charge of the n-th battery cell, MinCellSoc is the first actual state of charge of the first lowest cell, A1 is the first predetermined value, Sn is a first switch connected in parallel with the n-th battery cell, and n is the positive integer.

While the n-th battery cell Cn is balanced, the corresponding first actual state of charge of the n-th battery cell Cn is collected in real time and compared to the second predetermined value.

In response to CellSocn-MinCellSoc>A2, the BMU controls the circuit corresponding to the first sub-balancing module to stop the balancing of the n-th battery cell Cn, i.e., the first switch Sn is off, where A2 is the second predetermined value.

With the balancing control method for the battery cluster provided according to the embodiments of the present disclosure, by configuring the passive balancing circuit to perform the SOC balancing on the battery cell, it is possible to reduce complexity of the circuit and design costs. In addition, by setting a second predetermined value less than the first predetermined value to control the end of the SOC balancing of the battery cell, it is possible to avoid the repeated on and off of the first switch corresponding to the corresponding battery cell due to jitter, improve stability of the first sub-balancing module, and further improve stability and reliability of an energy storage system.

Second implementation of the SOH balancing of the battery cell

Continuing to refer to FIG. 5, in some embodiments, a first balancing module may include a second sub-balancing module, i.e., a first balancing module B illustrated in FIG. 5.

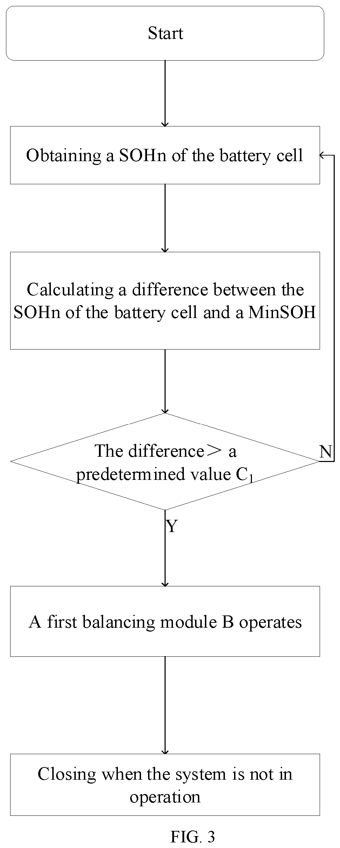

As illustrated in FIG. 3, the step 120 may include: in response to a difference between an actual state of health of a first highest cell and an actual state of health of a second lowest cell being greater than a third predetermined value, adjusting the second sub-balancing module to perform state of health balancing on the second lowest cell.

In this embodiment, one PACK corresponds to at least one second sub-balancing module, and the second sub-balancing module is configured to perform SOH balancing on each battery cell in the one PACK.

In some embodiments, the second sub-balancing module may be integrated on a BMU.

In some embodiments, the second sub-balancing module may also be disposed independently and connected to the BMU via a board-end inserting portion directly or via cables.

The first highest cell is a battery cell having a highest actual state of health among all battery cells included in the one PACK, and the second lowest cell is a battery cell having a lowest actual state of health among all the battery cells included in the one PACK.

The difference may be a difference value, a ratio, or the like, and the present disclosure is not limited thereto.

The third predetermined value may be self-defined by a user or determined based on an SOH estimation error of the PACK.

The second sub-balancing module may employ an active balancing circuit.

The second sub-balancing module may be a bidirectional or unidirectional DC/DC, and is used for energy transfer between the second lowest cell and a PACK where the second lowest cell is located.

During actual execution, the battery cell with the highest actual state of health and the battery cell with the lowest actual state of health in the PACK may be obtained in real time, and an SOH difference between the highest battery cell and the lowest battery cell may be compared.

In response to the difference between the actual state of health of the first highest cell and the actual state of health of the second lowest cell being less than or equal to the third predetermined value, no SOH balancing may be performed.

In response to the difference between the actual state of health of the first highest cell and the actual state of health of the second lowest cell being greater than the third predetermined value, the second sub-balancing module may be activated to perform the SOH balancing on the second lowest cell.

For example, in response to MaxCellSoh-MinCellSoh>Q1, the BMU controls the balancing circuit of the second sub-balancing module to sequentially balance the SOH of the second lowest cell and a corresponding battery cell where the SOH of the second lowest cell is located. MaxCellSoh is the actual state of health of the first highest cell, MinCellSoh is the actual state of health of the second lowest cell, and Q1 is the third predetermined value.

It needs to be noted that the first sub-balancing module and the second sub-balancing module operate independently of each other without affecting each other.

A balancing function of the second sub-balancing module operates continuously during operation of a battery system and stops when the system is in standby mode.

By taking a flyback DC/DC circuit as an example, the second sub-balancing module and its corresponding control logic are described below.

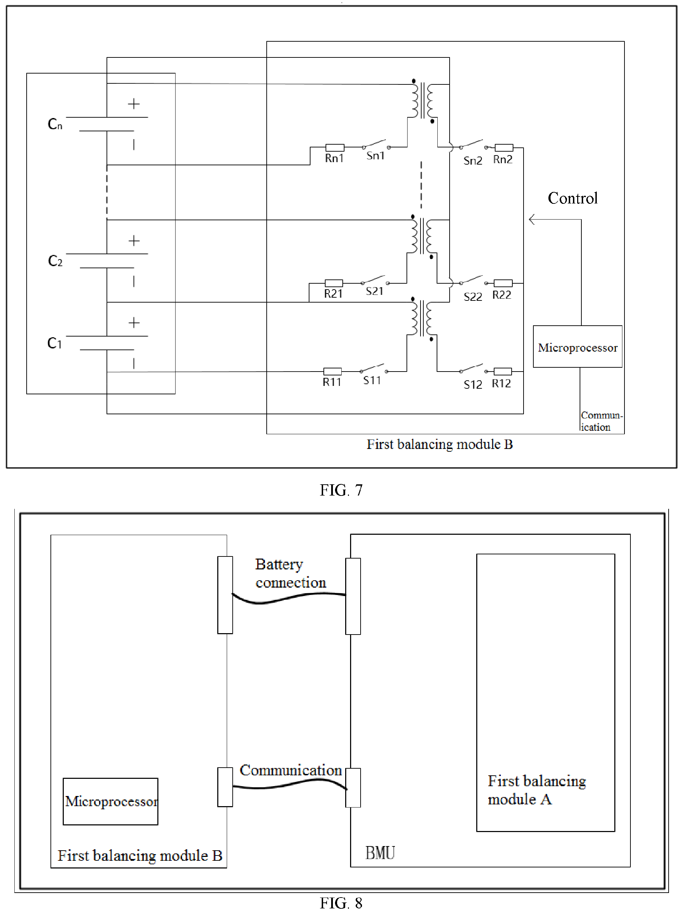

As illustrated in FIG. 7, in some embodiments, the second sub-balancing module includes at least one electromagnetic induction module arranged in a one-to-one correspondence with the at least one battery cell. The electromagnetic induction module has a first end connected to a positive electrode of the battery cell, a second end connected to a negative electrode of the battery cell via a second resistor and a second switch that are connected in series, a third end connected to the positive electrode of the battery cell, and a fourth end connected to the negative electrode of the battery cell via a third resistor and a third switch that are connected in series.

In response to the second switch and the third switch that correspond to the electromagnetic induction module being on, the entire PACK charges the battery cell corresponding to the electromagnetic induction module.

As illustrated in FIG. 3, adjusting the second sub-balancing module to perform state of health balancing on the second lowest cell may include: sequentially controlling the second switch and the third switch that correspond to the second lowest cell to be on.

In this embodiment, for example, in response to MaxCellSoh-MinCellSoh>Q1, a microprocessor of the current PACK sequentially controls the second switch Sn1 and the third switch Sn2 that correspond to the second lowest cell Cn to be on, to realize energy transfer through magnetization and demagnetization of secondary and primary inductors.

With the balancing control method for the battery cluster provided according to the embodiments of the present disclosure, by providing the active balancing circuit, which independently operates, to perform the SOH balancing on the battery cell, based on a two-level balancing module equipped with active and passive balancing functions and an increase/decrease function, it is possible to balance initial investment of the system, reduce battery balancing requirements during middle and late stages of system operation, and effectively improve reliability of the battery balancing circuit, realizing PACK balancing, thereby improving reliability of an energy storage system.

Third implementation of the SOC balancing of the PACK

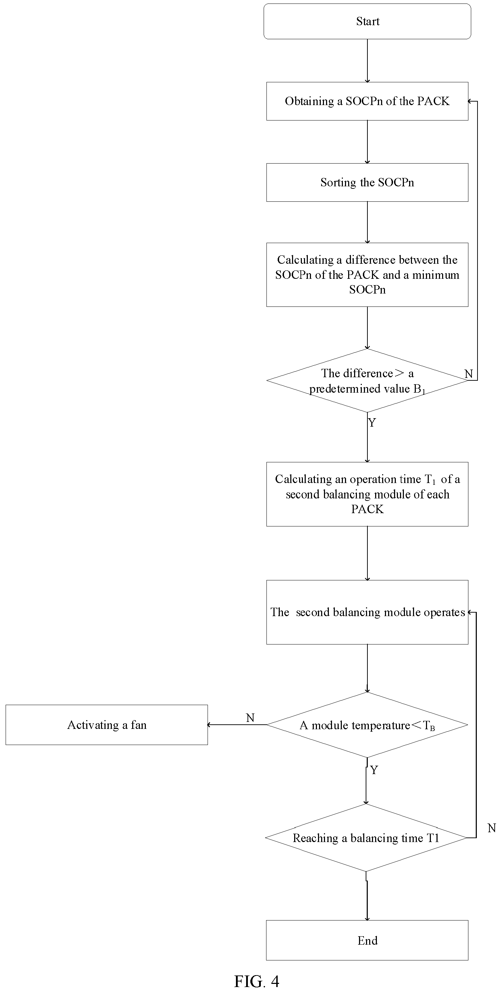

As illustrated in FIG. 4, in some embodiments, the step 130 may include: in response to a difference between a second actual state of charge of a first target PACK among the at least one PACK and a second actual state of charge of a lowest PACK among the at least one PACK being greater than a fourth predetermined value, adjusting the second balancing module to perform state of charge balancing on the first target PACK.

In this embodiment, the first target PACK may be any PACK among all the PACKs included in the battery cluster.

The difference may be a difference value, a ratio, or the like, and the present disclosure is not limited thereto.

The fourth predetermined value may be self-defined by a user or determined based on a SOC estimation error of the PACK.

During actual execution, each PACK correspondingly has one second balancing module, and the second balancing module performs SOC balancing on a single PACK.

The lowest PACK is a PACK with a lowest second actual state of charge among all the PACKs included in the battery cluster.

In response to PackSocn-MinPackSoc>B1, the BMU controls the second balancing module to balance a n-th PACK, where PackSocn is a second actual state of charge of the n-th PACK, MinPackSoc is a second actual state of charge of the lowest PACK, B1 is a fourth predetermined value, and n is a positive integer.

With the balancing control method for the battery cluster provided according to the embodiments of the present disclosure, by providing the second balancing module to perform the SOC balancing on the single PACK, in combination with the first balancing module, it is possible to realize balancing control on a secondary SOC corresponding to the battery cell and the PACK and solve a technical problem of requiring manual intervention and adjustment when PACKs in different SOC states are mixed into the battery cluster, improving the reliability of an energy storage system.

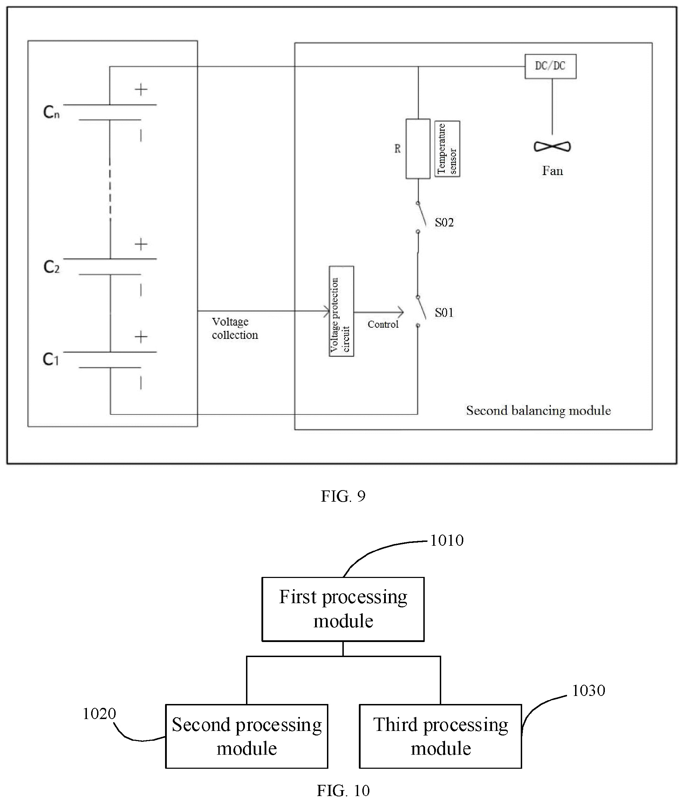

As illustrated in FIG. 9, in some embodiments, the second balancing module includes a fourth resistor and a fourth switch that are connected in series. The fourth resistor and the fourth switch that are connected in series are connected in parallel with the PACK.

The fourth resistor is a balancing resistor.

When the fourth switch is on, a passage is formed by the PACK with the fourth resistor and the fourth switch, and the PACK discharges.

Continuing to refer to FIG. 4, adjusting the second balancing module to perform state of charge balancing on the first target PACK may include: controlling the fourth switch corresponding to the first target PACK to be on; and controlling the fourth switch corresponding to the first target PACK to be off subsequent to a first target time length.

In this embodiment, the first target time length is a total time length for controlling the fourth switch to be on.

The first target time length may be self-defined by the user or calculated.

In some embodiments, the first target time length is determined by: calculating the first target time length based on the second actual state of charge of the first target PACK, the second actual state of charge of the lowest PACK, a battery nominal capacity, a battery aging degree of the first target PACK, a voltage across the first target PACK, and resistance of the fourth resistor.

In this embodiment, the first target time length may be determined by the following formula:

$$T\_1 = ((SOC\_Pn - SOC\_Pmin - B\_1) \times Q \times \llbracket SOH \rrbracket\_p)/I$$

$$I = V\_P/R$$

Where T_1 represents the first target time length, SOC_Pn represents the second actual state of charge of the n-th PACK, SOC_Pmin represents the second actual state of charge of the lowest PACK, B_1 represents the fourth predetermined value, Q represents the battery nominal capacity, $\llbracket SOH \rrbracket\_p$ represents the battery aging degree of the first target PACK, V_P represents the voltage across the first target PACK, and R represents the resistance of the fourth resistor.

During actual execution, for example, in response to PackSocn-MinPackSoc>B1, a fourth switch S02 corresponding to the n-th PACK is on, to perform SOC balancing of the PACK in a form of passive resistance discharge.

After a balancing time length of the PACK reaches the first target time length, the fourth switch S02 corresponding to the n-th PACK may be controlled to be off to end the balancing.

In some embodiments, in response to the first target PACK including a plurality of PACKs, the fourth switch corresponding to each PACK may be controlled to be on, to respectively perform SOC balancing on the plurality of PACKs.

With the balancing control method for the battery cluster provided according to the embodiments of the present disclosure, the SOC balancing of the single PACK is performed by the passive balancing module, which can solve a balancing problem of a PACK level without increasing a DC/DC optimizer and further improve the reliability of the energy storage system.

In some embodiments, the method may further include: in response to a cell voltage of the at least one battery cell in the first target PACK being less than a sixth predetermined value, controlling a branch circuit where the fourth resistor and the fourth switch are located to be off.

In this embodiment, the sixth predetermined value is a lowest voltage corresponding to the battery cell.

When the cell voltage of the battery cell is less than the lowest voltage, the battery cell may be approximately considered to be undervoltage.

During the actual execution, the cell voltage of each battery cell may be collected in real time. In response to the cell voltage being less than the sixth predetermined value V1, the fourth switch is controlled to be off to stop the SOC balancing, to avoid an undervoltage failure of the battery.

Continuing to refer to FIG. 9, in some embodiments, the second balancing module may further include a fifth switch S01 connected in series with the fourth switch S02. In a normal case, the fifth switch S01 may be configured to be on by default. In response to the cell voltage being less than the sixth predetermined value, the fifth switch S01 is controlled to be off to stop the SOC balancing.

With the balancing control method for the battery cluster provided according to the embodiments of the present disclosure, by monitoring the cell voltage of each battery cell in real time to control and stop the SOC balancing of the PACK when the cell voltage is low, it is possible to effectively avoid the occurrence of the undervoltage failure of the battery and improve the stability and reliability of the energy storage system.

Continuing to refer to FIG. 4, in some embodiments, the method may further include: in response to an actual temperature of the second balancing module being greater than a fifth predetermined value, performing a heat dissipation operation on the second balancing module.

In this embodiment, the fifth predetermined value is used for limiting a temperature of the second balancing module to be within a more appropriate temperature range.

The fifth predetermined value may be self-defined by the user or determined based on experimental data, and the present disclosure is not limited herein.

During the actual execution, a temperature sensor may be provided in the second balancing module to collect the actual temperature of the second balancing module and compare the actual temperature to the fifth predetermined value in real time.

In response to the actual temperature being lower than or equal to the fifth predetermined value, no heat dissipation operation may be performed on the second balancing module.

In response to the actual temperature being greater than the fifth predetermined value, a heat dissipation device, like a heat dissipation fan, disposed in the second balancing module is activated, to dissipate heat from the second balancing module and reduce the temperature of the second balancing module.

In some embodiments, the heat dissipation fan may also be used for energy transfer during the SOC balancing of the PACK.

With the balancing control method for the battery cluster provided according to the embodiments of the present disclosure, by monitoring the actual temperature of the second balancing module to perform the heat dissipation operation when the actual temperature of the second balancing module is high, the reliability of the energy storage system may be further improved, and a service life of the energy storage system may be prolonged.

In some embodiments, the method may further include: controlling the second balancing module based on an operation mode corresponding to the battery cluster.

In this embodiment, the operation mode may include an operation and maintenance mode, an online operation mode, and a cloud control mode.

The operation and maintenance mode operates in an initial mounting stage with the need to perform SOC leveling.

In the online operation mode, real-time control may be performed during operation of the battery system.

In the cloud control mode, control may be performed based on big data control or manual background.

During the actual execution, the second balancing module may be controlled based on the set operation mode.

In the balancing control method for the battery cluster provided according to the embodiments of the present disclosure, the execution subject may be a balancing control apparatus for the battery cluster. In the embodiments of the present disclosure, as an example, the balancing control apparatus for the battery cluster performs the balancing control method for the battery cluster. The balancing control apparatus for the battery cluster provided according to the embodiments of the present disclosure is described.

The embodiments of the present disclosure further provide the balancing control apparatus for the battery cluster.

The battery cluster includes at least one PACK. Each of the at least one PACK includes at least one battery cell.

As illustrated in FIG. 10, the balancing control apparatus for the battery cluster includes a first processing module 1010, a second processing module 1020, and a third processing module 1030.

The first processing module 1010 is configured to obtain at least one of a first actual state of charge and an actual state of health of each of the at least one battery cell, and a second actual state of charge of each of the at least one PACK.

The second processing module 1020 is configured to control, by a first balancing module based on the at least one of the first actual state of charge and the actual state of health, at least one of state of charge balancing and state of health balancing of each battery cell.

The third processing module 1030 is configured to control, by a second balancing module based on the second actual state of charge, state of charge balancing of the PACK.

The first balancing module and the second balancing module are both connected to the PACK.

With the balancing control apparatus for the battery cluster provided according to the embodiments of the present disclosure, by distinguishing different balancing purposes, the first balancing module for balancing the differences of the battery cell and the second balancing module for balancing the differences of the PACK are respectively provided, which can effectively ensure the normal and efficient operation of the battery cluster and have the high reliability, while reducing the costs and the complexity of the system.

In some embodiments, the first balancing module includes a first sub-balancing module, and a second processing module 1020 may further be configured to adjust, in response to a difference between a first actual state of charge of a first target battery cell among the at least one battery cell and a first actual state of charge of a first lowest cell among the at least one battery cell being greater than a first predetermined value, the first sub-balancing module to perform state of charge balancing on the first target battery cell. The first lowest cell is a battery cell with a lowest first actual state of charge among the at least one battery cell.

In some embodiments, the first sub-balancing module includes at least one first switch and a first resistor. The at least one first switch is connected in parallel with the at least one battery cell in a one-to-one correspondence, and the first resistor is disposed between each of the at least one first switch and each of the at least one battery cell connected in parallel with the at least one first switch.

The second processing module 1020 may further be configured to: control a first switch connected in parallel with the first target battery cell to be on; and control, in response to the difference between the first actual state of charge of the first target battery cell and the first actual state of charge of the first lowest cell being less than a second predetermined value, the first switch connected in parallel with the first target battery cell to be off. The second predetermined value is less than the first predetermined value.

In some embodiments, the first balancing module includes a second sub-balancing module, and a second processing module 1020 may further be configured to adjust, in response to a difference between an actual state of health of a first highest cell and an actual state of health of a second lowest cell being greater than a third predetermined value, the second sub-balancing module to perform state of health balancing on the second lowest cell. The first highest cell is a battery cell with a highest actual state of health among the at least one battery cell. The second lowest cell is a battery cell with a lowest actual state of health among the at least one battery cell.

In some embodiments, the second sub-balancing module includes at least one electromagnetic induction module arranged in a one-to-one correspondence with the at least one battery cell. Each of the at least one electromagnetic induction module has a first end connected to a positive electrode of the battery cell, a second end connected to a negative electrode of the battery cell via a second resistor and a second switch that are connected in series, a third end connected to the positive electrode of the battery cell, and a fourth end connected to the negative electrode of the battery cell via a third resistor and a third switch that are connected in series. The second processing module 1020 may further be configured to sequentially control the second switch and the third switch that correspond to the second lowest cell to be on.

In some embodiments, the third processing module 1030 may further be configured to adjust, in response to a difference between a second actual state of charge of a first target PACK and a second actual state of charge of a lowest PACK in the at least one PACK being greater than a fourth predetermined value, the second balancing module to perform state of charge balancing on the first target PACK. The lowest PACK is a PACK with a lowest second actual state of charge in the at least one PACK.

In some embodiments, the second balancing module includes a fourth resistor and a fourth switch that are connected in series. The fourth resistor and the fourth switch that are connected in series are connected in parallel with the PACK. The third processing module 1030 may further be configured to: control the fourth switch corresponding to the first target PACK to be on; and control the fourth switch corresponding to the first target PACK to be off subsequent to a first target time length.

In some embodiments, the apparatus may further include a fourth processing module configured to calculate the first target time length based on the second actual state of charge of the first target PACK, the second actual state of charge of the lowest PACK, a battery nominal capacity, a battery aging degree of the first target PACK, a voltage across the first target PACK, and resistance of the fourth resistor.

In some embodiments, the apparatus may further include a fifth processing module configured to control, in response to a cell voltage of the at least one battery cell in the first target PACK being less than a sixth predetermined value, a branch circuit where the fourth resistor and the fourth switch are located to be off.

In some embodiments, the apparatus may further include a sixth processing module configured to perform, in response to an actual temperature of the second balancing module being greater than a fifth predetermined value, a heat dissipation operation on the second balancing module.

The balancing control apparatus for the battery cluster in the embodiments of the present disclosure may be an electronic device or a component in the electronic device, such as an integrated circuit or a chip. The electronic device may be a terminal or a device other than the terminal. Exemplarily, the electronic device may be a mobile phone, a tablet computer, a laptop computer, a handheld computer, an in-vehicle electronic device, a mobile internet device (MID), an augmented reality (AR)/virtual reality (VR) device, a robot, a wearable device, an ultra-mobile personal computer (UMPC), a netbook or a personal digital assistant (PDA), or the like. The electronic device may also be a server, a network attached storage (NAS), a personal computer (PC), a television (TV), a teller machine, a self-service machine, or the like, and the embodiments of the present disclosure do not specifically limit this.

The balancing control apparatus for the battery cluster in the embodiments of the present disclosure may be an apparatus having an operation system. The operation system may be an Android operation system, an IOS operation system, or other possible operation systems, and the embodiments of the present disclosure do not specifically limit this.

The balancing control apparatus for the battery cluster provided according to the embodiments of the present disclosure may realize various processes implemented by method embodiments of FIG. 1 to FIG. 4, and details are omitted herein for the avoidance of repetition.

As illustrated in FIG. 5, the embodiments of the present disclosure further provide a system based on the balancing control method for the battery cluster as described according to any of the above embodiments. The system includes a battery management unit, a first balancing module, and a second balancing module.

In this embodiment, the first balancing module is connected to both the battery management unit and the PACK and is controlled by the battery management unit to perform SOC balancing and/or SOH balancing on a single battery in the PACK.

The second balancing module is connected to both the battery management unit and the PACK and is controlled by the battery management unit to perform the SOC balancing on the PACK.

A specific control logic has been described in the above embodiments, and details of the present disclosure are omitted herein.

With the system provided according to the embodiments of the present disclosure, by distinguishing different balancing purposes, the first balancing module for balancing the differences of the battery cell and the second balancing module for balancing the differences of the PACK are respectively provided, which can effectively ensure the normal and efficient operation of the battery cluster and have the high reliability, while reducing the costs and the complexity of the system.

Continuing to refer to FIG. 5, in some embodiments, the first balancing module includes at least one of a first sub-balancing module A and a second sub-balancing module B.

In this embodiment, the first sub-balancing module A may adopt the passive balancing circuit for realizing a SOC balancing function of the battery cell.

The first sub-balancing module A may be integrated in the battery management unit.

The second sub-balancing module B may adopt the active balancing circuit for realizing an SOH balancing function of the battery cell.

The second sub-balancing module B is an independent part and may be integrated in the PACK or disposed outside the system.

As illustrated in FIG. 8, in some embodiments, the second sub-balancing module B and the BMU may be directly connected through a board-end inserting portion or connected through cables, and the BMU and the second sub-balancing module B may communicate through a serial port or a CAN interface.

In some embodiments, the battery system may operate using only the BMU that includes the first sub-balancing module A.

In some embodiments, the second sub-balancing module B may be mounted in the PACK before leaving the factory or may be added in subsequent operation and maintenance processes of the battery system, and the present disclosure does not limit this.

With the system provided according to the embodiments of the present disclosure, by connecting an active balancing part to the battery system in an expanded form, application flexibility may be improved.

As illustrated in FIG. 6, in some embodiments, the first sub-balancing module A includes at least one first switch Sn (n=1, 2, ..., n) and a first resistor. The at least one first switch Sn (n=1, 2, ..., n) is connected in parallel with the at least one battery cell in a one-to-one correspondence, and the first resistor is disposed between the first switch and the battery cell connected in parallel with the first switch.

The first resistor may be disposed between the positive electrode of the battery cell and the first switch, or between the negative electrode of the battery cell and the first switch, or between the positive electrode of the battery cell and the first switch and between the negative electrode of the battery cell and the first switch.

As illustrated in FIG. 7, in some embodiments, the second sub-balancing module B includes at least one electromagnetic induction module arranged in a one-to-one correspondence with the at least one battery cell. The electromagnetic induction module has a first end connected to the positive electrode of the battery cell, a second end connected to the negative electrode of the battery cell via a second resistor Rn1 (n=1, 2, ..., n) and a second switch Sn1 (n=1, 2, ..., n) that are connected in series, a third end connected to the positive electrode of the battery cell, and a fourth end connected to the negative electrode of the battery cell via a third resistor Rn2 (n=1, 2, ...···, n) and a third switch Sn2 (n=1, 2, ..., n) that are connected in series.

As illustrated in FIG. 9, in some embodiments, the second balancing module includes a fourth resistor and a fourth switch S02 that are connected in series. The fourth resistor and the fourth switch S02 that are connected in series are connected in parallel with the PACK.

The fourth resistor is a balancing resistor.

Continuing to refer to FIG. 9, in some embodiments, in response to the second balancing module including a fourth resistor and a fourth switch S02 that are connected in series, and in response to the fourth resistor and the fourth switch S02 that are connected in series being connected in parallel with the PACK, the second balancing module may further include a fifth switch S01 and a voltage protection circuit.

In this embodiment, the fifth switch S01 is connected in series with the fourth switch S02.

The voltage protection circuit is electrically connected to the PACK and the fifth switch S01 and is configured to control an on/off state of the fifth switch S01 based on the cell voltage of each battery cell in the PACK.

For example, in response to the cell voltage being less than the sixth predetermined value, the voltage protection circuit controls the fifth switch S01 to be off to stop the SOC balancing, avoiding the occurrence of the undervoltage failure of the battery and improving the stability and reliability of the energy storage system.

Continuing to refer to FIG. 9, in some embodiments, the second balancing module may further include a temperature sensor and a heat dissipation device.

In this embodiment, the temperature sensor is configured to collect the actual temperature of the second balancing module.

The temperature sensor may be disposed in the vicinity of the fourth resistor.

The heat dissipation device is connected to a positive electrode of a PACK corresponding to the second balancing module. An on/off state of the heat dissipation device is controlled based on the actual temperature.

In some embodiments, the heat dissipation device may include a DC/DC converter and a fan.

The DC/DC converter is connected to the PACK.

During the actual execution, in response to the BMU detecting that the actual temperature of the second balancing module is greater than the fifth predetermined value, the fan disposed in the second balancing module is controlled to turn on to perform heat dissipation processing on the second balancing module, to reduce the temperature of the second balancing module.

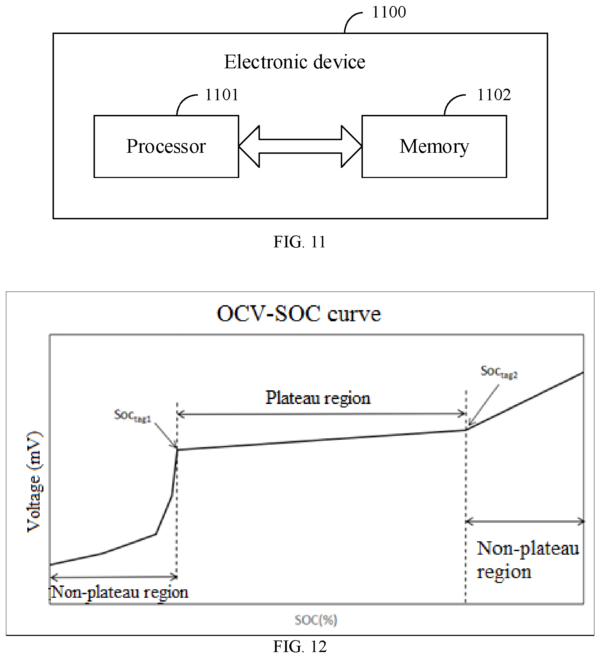

In some embodiments, as illustrated in FIG. 11, the embodiments of the present disclosure further provide an electronic device 1100. The electronic device 1100 includes a processor 1101, a memory 1102, and a computer program stored on the memory 1102 and executable on the processor 1101. When executed by the processor 1101, the program implements various processes of the embodiments of the balancing control method for the battery cluster as described above and may achieve the same technical effect. For the avoidance of repetition, details are omitted herein.

It should be noted that the electronic device in the embodiments of the present disclosure includes a mobile electronic device and a non-mobile electronic device as described above.

The embodiments of the present disclosure further provide a non-transitory computer-readable storage medium having a computer program stored thereon. The computer program, when executed by the processor, implements various processes of the embodiments of the balancing control method for the battery cluster as described above and may achieve the same technical effect. For the avoidance of repetition, details are omitted herein.

The processor is a processor in the electronic device as described in the above embodiments. The readable storage medium includes a computer-readable storage medium, such as a computer read-only memory ROM, a random access memory RAM, and a magnetic disk or an optical disk.

The embodiments of the present disclosure further provide a computer program product, including a computer program. The computer program, when executed by the processor, implements the balancing control method for the battery cluster as described above.

The processor is the processor in the electronic device as described in the above embodiments. The readable storage medium includes a computer-readable storage medium, such as a computer read-only memory ROM, a random access memory RAM, and a magnetic disk or an optical disk.

The embodiments of the present disclosure further provide a chip. The chip includes a processor and a communication interface. The communication interface is coupled to the processor. The processor is used for running a program or an instruction. In this way, various processes of the embodiments of the balancing control method for the battery cluster as described above are realized, and the same technical effect can be achieved. For the avoidance of repetition, details are omitted herein.

It should be understood that the chip mentioned in the embodiments of the present disclosure may also be referred to as a system-level chip, a system chip, a chip system or a system-on-chip, or the like.

In recent years, an energy storage battery system has developed rapidly and is developing in aspects of high capacity, high power density, and high power integration level. Therefore, a quantity of cells included in the energy storage battery system is also increasing. Generally, one energy storage system is often composed of a plurality of battery clusters connected in series and parallel, and one battery cluster is composed of different quantities of single cells connected in series and parallel. Because of limitations of production control and varying degrees of internal resistance aging during use, internal resistance differences among the battery clusters increase over time, which causes different currents passing through each battery cluster during charging and discharging, ultimately resulting in increasing inconsistencies in battery cluster capacities. Consequently, an available capacity of the energy storage battery system decreases over time.

A common approach currently used to solve the above problem is to adjust cluster currents of the battery clusters based on determination of the SOC or voltage differences across the entire range, to balance the SOC between the battery clusters. However, for the energy storage battery system using this kind of battery cell system with both "a plateau region" (generally referring to an interval with stable voltage change rates) and "a non-plateau region" (generally referring to an interval with fluctuant voltage change rates), when the cell is in the "plateau region", the voltage changes relatively stable, and if a voltage difference is used as an adjustment criterion, an erroneous adjustment is easily caused due to sampling errors; while when the cell is in the "non-plateau region", the voltage changes rapidly, and if only the SOC difference is used as the adjustment criterion, the erroneous adjustment is also easily caused due to SOC sampling errors.

Therefore, how to accurately adjust inter-cluster inconsistency of the battery clusters according to cell characteristics in the energy storage system is a technical problem to be solved by the present disclosure.

The present disclosure describes an adjustment method for an energy storage system. The method is implemented to perform balancing control on the energy storage system. The energy storage system includes at least two battery clusters. Each of the at least two battery clusters includes at least one cell. The method includes: determining whether the energy storage system is in a voltage plateau region or a voltage non-plateau region; in response to the energy storage system being in the voltage plateau region, using a maximum real-time SOC or a minimum real-time SOC of all battery clusters as a basis for determining whether balancing is required, and using the battery clusters as balancing objects; and in response to the energy storage system being in the voltage non-plateau region, using a maximum cell voltage or a minimum cell voltage of all the battery clusters as a basis for determining whether the balancing is required, and using all the battery clusters as the balancing objects.

In the present disclosure, it is determined whether the energy storage system is in the voltage plateau region or the voltage non-plateau region by detecting the operation state of the energy storage system. Further, a selection is performed to get a basis for determining whether the balancing is required. In some embodiments, when the energy storage system operates in the "voltage plateau region", the voltage changes relatively stable, the maximum real-time SOCs or the minimum real-time SOCs of all the battery clusters are used as a basis for determining whether the balancing is required, and the battery clusters are used as the balancing objects. When the energy storage system operates in the "voltage non-plateau region", the voltage changes rapidly, the maximum cell voltages or the minimum cell voltages of all the battery clusters are used as the basis for determining whether the balancing is required, and the battery clusters are used as the balancing objects. In this way, the adjustment method for the energy storage battery of the present disclosure can perform targeted selection on an adjustment determination basis according to different operation states of the energy storage system, which can more accurately grasp balancing adjustment timing of the battery clusters. Therefore, the inconsistency between the battery clusters can be accurately reduced in real time, which avoids misadjustment caused by sampling errors, SOC errors, and the like, improves balancing adjustment accuracy, and utilizes charging and discharging capacities of the entire energy storage system to the maximum extent.

The determination of whether the energy storage system is in the voltage plateau region or the voltage non-plateau region is made by detecting the cell aging state of the energy storage system to obtain an OCV-SOC curve of the energy storage system. Generally, the OCV-SOC curve of each energy storage system is set when leaving the factory. Therefore, this curve can be directly invoked in the adjustment method for the energy storage battery of the present disclosure to identify the plateau region and the non-plateau region.

However, with the use of the energy storage system, the OCV-SOC curve is different from its factory setting as the cell aging of the battery cluster of the energy storage system. Therefore, by regularly detecting the cell aging state of the energy storage system, the OCV-SOC curve of the energy storage system can be updated according to the cell aging state. Further, the voltage plateau region and the voltage non-plateau region can be distinguished according to a slope of the OCV-SOC curve. A specific interval for reconstructing the OCV-SOC curve may be adjusted according to user needs.

The OCV-SOC curve obtained in this implementation is illustrated in FIG. 12. During an initial stage of charging or discharging, the voltage of the energy storage system changes rapidly. Moreover, the larger a charging and discharging rate, the faster the voltage change. When the energy storage system enters a slowly changing stage, the smaller the charging and discharging rate, the longer time of duration of the voltage plateau region. In a later stage of charging or discharging of the energy storage system, the voltage change of the energy storage system also becomes faster, especially during discharging, when an external load voltage starts to drop sharply until it reaches a discharge cut-off voltage.

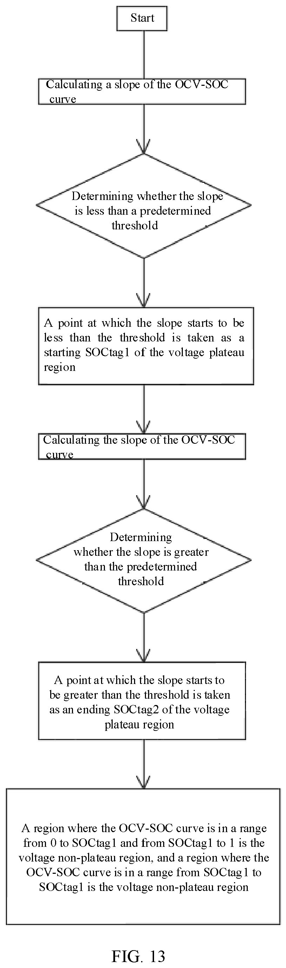

The OCV-SOC curve of the energy storage system according to the implementations of the present disclosure is a curve plotted with an internal voltage OCV of the energy storage system as an ordinate and the state of charge SOC of the energy storage system as an abscissa. The cell aging state of the energy storage system is detected to construct the OCV-SOC curve of the energy storage system. Moreover, according to the slope of the OCV-SOC curve, the voltage plateau region and the voltage non-plateau region are divided. The voltage plateau region changes slowly, so the slope is small and can remain unchanged in a predetermined region for a long time. Therefore, for a determination process of the voltage plateau region, as illustrated in FIG. 13, it is calculated whether the slope of the OCV-SOC curve is less than a set threshold. In response to the slope being less than the threshold, it may be determined that the system is in the voltage plateau region; otherwise, the system is in the voltage non-plateau region.

According to the characteristics of the energy storage system, combined with the OCV-SOC curve of the energy storage system illustrated in FIG. 12, it is not difficult to find that, the energy storage system is generally in the voltage non-plateau region in the initial stages of charging or discharging, and gradually enters the voltage plateau region as stabilization of a charging and discharging process. As the charging and discharging process enters their later stage, the voltage changes drastically, and the energy storage system re-enters the voltage non-plateau region again. Endpoint values of two ends of the voltage plateau region are SOCtag1 and SOCtag2, where 0<SOCtag1 <SOCtag2< 1, SOCtag1 represents a starting point of the voltage plateau region, and SOCtag2 represents an endpoint of the voltage plateau region, i.e., SOCtag1 represents a starting SOC value of the voltage plateau region, and SOCtag2 represents an ending SOC value of the voltage plateau region.

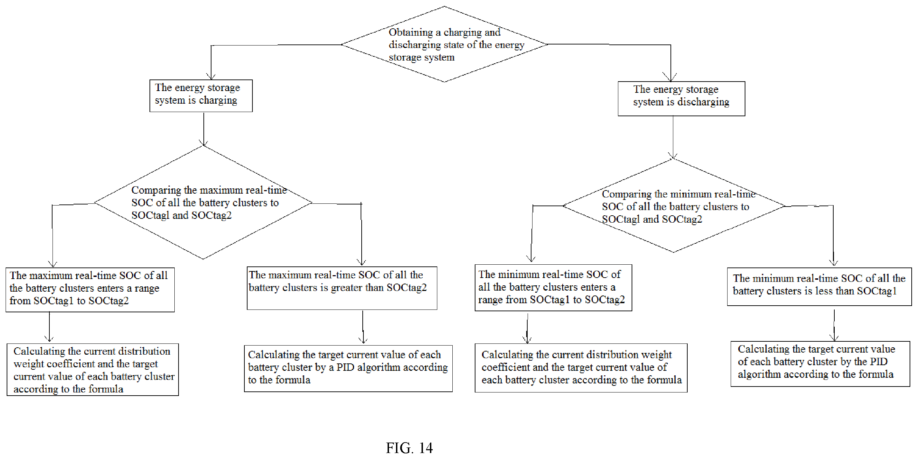

A processing flow of the adjustment method for the energy storage system according to this implementation is illustrated in FIG. 14. The target current value of the battery cluster may be adjusted in real time by using a PID control algorithm in combination with a charging and discharging state of the energy storage system. In this way, the adjustment is more targeted and has higher accuracy. That is, the charging and discharging state of the energy storage system is obtained, and an inter-cluster balancing adjustment is performed on the energy storage system according to the charging and discharging state of the energy storage system. Specific measures for the balancing adjustment of each battery cluster in the energy storage system are determined below in combination with the determination of whether the energy storage system is in a charging process or a discharging process and by determining whether the energy storage system operates in the voltage plateau region or the voltage non-plateau region. The specific measures may be specifically divided into balancing adjustment schemes under four conditions. The four conditions are a condition of "charging and being in the voltage plateau region", a condition of "charging and being in the voltage non-plateau region", a condition of "discharging and being in the voltage plateau region", and a condition of "discharging and being in the voltage non-plateau region".

Illustration is performed in the following embodiments by taking a segment of operation interval for the energy storage system as an example. The adjustment method for the energy storage system of the present disclosure may be applied to an operation interval for the energy storage system including both the voltage plateau region and the voltage non-plateau region or solely applied to the voltage plateau region or the voltage non-plateau region. In addition, the division of the operation intervals of the energy storage system is not limited to this embodiment and may consist of a plurality of segments.

First embodiment

When the energy storage system is in the charging process, the battery cluster quickly enters the plateau region and stays in the voltage non-plateau region from 0 to SOCtag1 for a short time. In addition, as the charging process continues, an internal voltage of the battery cluster keeps increasing until the battery cluster has the maximum real-time SOC greater than SOCtag2 and enters the voltage non-plateau region. Therefore, in this embodiment, during the charging, a comparison between SOCmax and SOCtag2 is used as a basis for determining whether the system is in the voltage plateau region or the voltage non-plateau region.

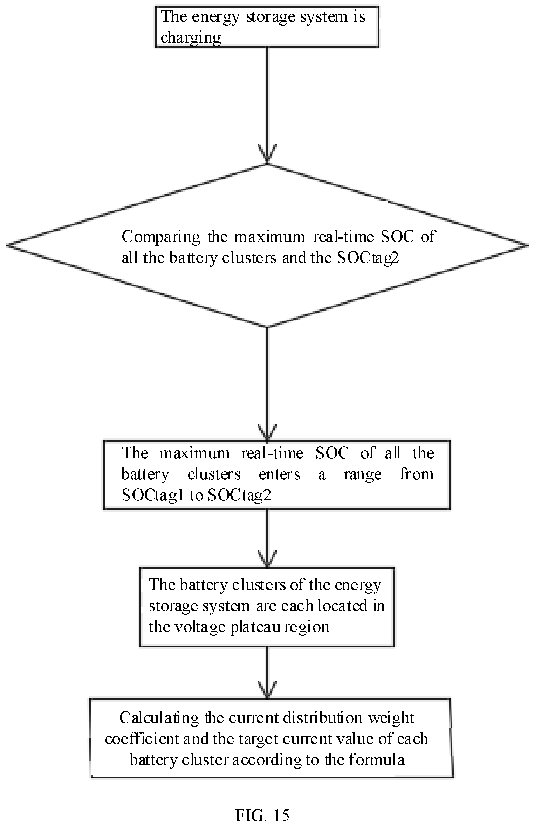

In this embodiment, as illustrated in FIG. 15, the maximum real-time SOC of all the battery clusters, i.e., SOCmax, enters a range from SOCtag1 to SOCtag2 when the energy storage system is in a charging process, where SOCtag1≤SOCmax≤SOCtag2, i.e., each battery cluster of the energy storage system is in the voltage plateau region. An adjustment current of each battery cluster is calculated by the following formula:

$$I_i = \min\{x_i * I_{total}, I_{i\ maximum\ allowable\ charging\ current}\}$$

where $I_i \cdot$ represents a target current value of each battery cluster, represents a cluster-current distribution weight coefficient of each battery cluster, and represents a total current inputted to the energy storage system. The calculated target current value $I_i \cdot$ of each battery cluster is less than or equal to the maximum allowable charging current of the battery cluster. A relatively small value between the calculated value and the maximum allowable charging current is taken. The cluster-current distribution weight coefficient is calculated by the following formula:

$$x_i = \frac{(Soc_{tag2} - MaxSoc_i) * Cap_i}{\sum_i^n((Soc_{tag2} - MaxSoc_i) * Cap_i)}$$

where **MaxSoc$_i$** represents a maximum real-time SOC of each battery cluster, and represents a nominal capacity of each battery cluster at a current temperature.

Second embodiment

An adjustment method for an energy storage system of this embodiment optimizes and improves the method in the first embodiment. The optimization lies in that the total current $I_{total}^t$ inputted to the energy storage system used in the calculation of the target current value $I_i \cdot$ of each battery cluster is a sum of the adjusted target current values of the battery clusters at the previous moment.

The sum of the adjusted target current values of the battery clusters at the previous moment is taken as the total current inputted to the energy storage system at the current moment, to realize reusing calculation of the result, which can improve calculation accuracy of the target current value and is beneficial to accurate energy distribution of the external input current. In addition, when the total current inputted from the outside to the energy storage system is large, the target current values calculated according to the cluster-current distribution weight coefficient of each battery cluster all exceed the maximum allowable charging current of each battery cluster. Even after taking the smaller value, a current of each battery cluster is still the maximum allowable charging current, which makes it impossible to reduce a consistency difference between clusters by adjusting the current of each battery cluster. Therefore, the sum of the adjusted target current values of the battery clusters at the previous moment is selected as the total current inputted to the energy storage system at the current moment, which can better achieve a purpose of the balancing adjustment of the energy storage system.

That is, the target current value $I_i \cdot$ of each battery cluster is calculated by the following formula:

$$I_i = \min\{x_i * I_{total}^t, I_{i\ maximum\ allowable\ charging\ current}\}$$

where $I_{total}^t$ represents the total current inputted to the energy storage system at the current moment. The total current inputted to the energy storage system at the current moment is calculated by the following formula:

$$I_{total}^t = \Sigma I_i^{t-1}$$

where $I_i^{t-1}$ represents an adjusted target current value of each battery cluster at the previous moment.

Third embodiment

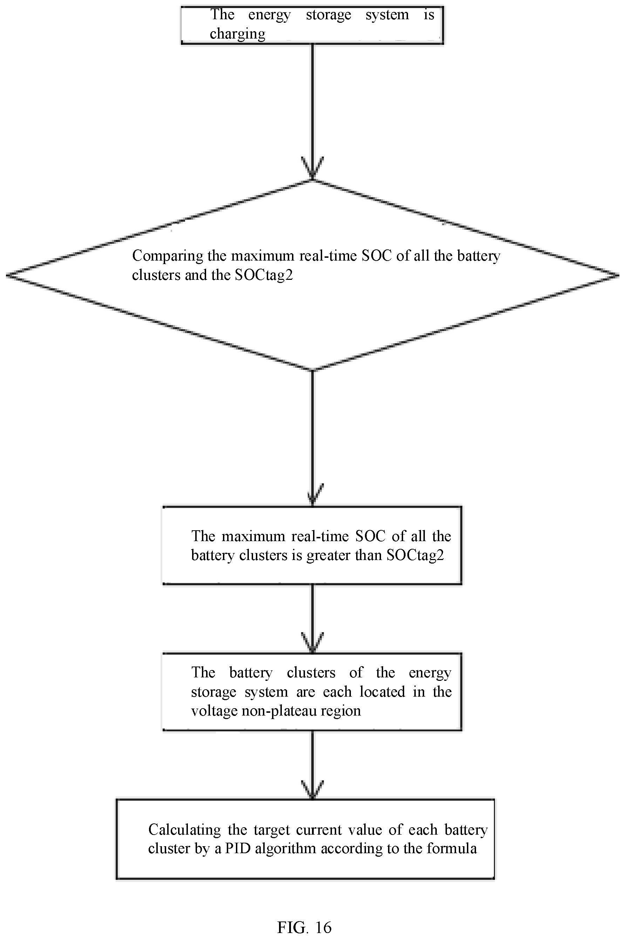

In this embodiment, as illustrated in FIG. 16, when the energy storage system is in a charging process, and when the maximum real-time SOC of all the battery clusters, i.e., SOCmax, is greater than SOCtag2, where SOCtag2 < SOCmax < 1, i.e., each of the battery clusters of the energy storage system is in the voltage non-plateau region, a maximum cell voltage of each battery cluster and an average value of the maximum cell voltages of all the battery clusters are compared. In response to a difference between the maximum cell voltage of a battery cluster and the average value of the maximum cell voltages of all the battery clusters exceeding a predetermined voltage difference threshold, a current adjustment is performed on the battery cluster; otherwise, no current adjustment is performed on the battery cluster.

In a process of performing the current adjustment on the battery cluster as responding to the difference between the maximum cell voltage of the battery cluster and the average value of the maximum cell voltages of all the battery clusters exceeding the predetermined voltage difference threshold, an adjustment current of the battery cluster is calculated by the following formula:

$$\mathbf{MaxVolt_{avg}} = \frac{\sum \mathbf{MaxVolt_i}}{\mathbf{i}}$$

$$\mathbf{err_t^i} = \mathbf{MaxVolt_t^i} - \mathbf{MaxVolt_{avg}}$$

$$\mathbf{\delta I_t^i} = \mathbf{K_p err_t^i} + \mathbf{K_i} \int \mathbf{err_t^i} + \mathbf{K_d} \frac{\mathbf{derr_t^i}}{\mathbf{dt}}$$

$$\mathbf{I_t^i} = \mathbf{min}\{\mathbf{I_{t-1}^i} - \mathbf{\delta I_t^i}, \mathbf{I_{i\ maximum\ allowable\ charging\ current}}\}$$

Where **MaxVolt$_i$** represents the maximum cell voltage of each battery cluster, i represents a quantity of battery clusters, **MaxVolt$_{avg}$** represents the average voltage of the maximum cell voltages of all the battery clusters, $\mathbf{\delta I_t^i}$ represents the amount of current needing to be adjusted in a current cycle, **K$_p$** represents a proportional adjustment coefficient, **K$_i$** represents an integral adjustment coefficient, **K$_d$** represents a differential adjustment coefficient, $\mathbf{I_{t-1}^i}$ represents a target current value in a previous cycle, and $\mathbf{I_t^i}$ represents a target current value in the current cycle.

When the difference between the maximum cell voltage of the battery cluster and the average value of the maximum cell voltages of all the battery clusters is compared to the predetermined voltage difference threshold, a dispersion degree between the difference and the predetermined voltage difference threshold is obtained by discrete calculation, to realize the determination of whether the battery cluster needs the current adjustment.

An integral adjustment term $\int \mathbf{err_t^i}$ is removed during calculation of the amount $\mathbf{\delta I_t^i}$ of current needing to be adjusted in the current cycle under any one of the following conditions including: the maximum cell voltage of the adjusted battery cluster being less than a sum of an average voltage of maximum voltages of all the battery clusters and the predetermined voltage difference threshold; a switch in a current operation state (the current operation state of the battery cluster generally includes a resting state, a charging state, and a discharging state, the switch in the current operation state here refers to a change of the current operation state of the battery cluster from the charging state to the discharging state or a change of the current operation state of the battery cluster from the charging state to the resting state); an integration time for calculating $\mathbf{\delta I_t^i}$ exceeding a predetermined adjustment step length; and a difference between an actual current value in the current cycle and the target current value $\mathbf{I_{t-1}^i}$ in the previous cycle exceeding a predetermined range, that is, a significant difference occurs between the actual current value in the current cycle collected by a current collection unit and the target current value $\mathbf{I_{t-1}^i}$ in the previous cycle, indicating that the current adjustment fails. As a result, the integral adjustment term is removed, and the amount of current needing to be adjusted $\mathbf{\delta I_t^i}$ in the current cycle is recalculated.

The second embodiment and the third embodiment are described using an experimental example. In this experimental example, two battery clusters are provided in the energy storage system and have the same nominal capacity Cap. When the balancing adjustment is performed on the energy storage system of this experimental example, a targeted balancing adjustment is performed based on two operation states, which are an operation state of "charging and being in the voltage plateau region" and an operation state of "charging and being in the voltage non-plateau region".

A target current value of the energy storage system when the operation state of the energy storage system is "charging and being in the voltage plateau region" is illustrated in the following table:

| Endpoint value of the voltage plateau region | Charging and being in the voltage plateau region | | | | | | |
|---|---|---|---|---|---|---|---|
| Starting SOC value of the voltage plateau region SOCtag1=0.2 | | | Maximum real-time SOC | Current distribution weight coefficient | Distribution current (A) | Maximum allowable charging current (A) | Target current value (A) |
| Ending SOC value of the voltage plateau region SOCtag2=0.88 | Total current inputted from the outside to the energy storage system at a moment t-1 : 400A | First battery cluster | 0.4 | 0.56 | 224 | 140 | 140 |
| | | Second battery cluster | 0.5 | 0.44 | 176 | 140 | 140 |
| | Total current inputted from the outside | First battery cluster | 0.45 | 0.54 | 151.2 | 140 | 140 |
| | | Second battery cluster | 0.52 | 0.46 | 128.8 | 140 | 128.8 |
| | to the energy storage system at a moment t: 280A | | | | | | |

By detecting the maximum real-time SOC of each battery cluster in the energy storage system in the charging state and comparing the maximum real-time SOC to an ending SOCtag2 value of the voltage plateau region, in response to both the maximum real-time SOCs of the two battery clusters at the moment t-1 and the moment t being less than the ending SOCtag2 value of the voltage plateau region, it can be seen that the two battery clusters at the two moments are both in the voltage plateau region.

At the moment t-1, the current distribution weight coefficient is calculated based on the maximum real-time SOC of each battery cluster and the ending SOCtag2 value of the voltage plateau region. Then, the distribution current is calculated according to the current distribution weight coefficient and the total current inputted from the outside to the energy storage system. The calculated distribution current is then compared to the maximum allowable charging current of the battery cluster, and the smaller value is taken as the target current value. Since the distribution current calculated for two battery clusters is greater than their maximum allowable charging current, the two battery clusters both select the maximum allowable charging current as a target current value at the moment t-1, and a current externally inputted to each battery cluster is controlled based on the target current value.

At the moment t, the current distribution weight coefficient is calculated based on the maximum real-time SOC of each battery cluster and the ending SOCtag2 value of the voltage plateau region. Then, the distribution current is calculated according to a sum of the current distribution weight coefficient and the adjusted target current value of each battery cluster at the previous moment. The calculated distribution current is then compared to the maximum allowable charging current of each battery cluster, and the smaller value is taken as the target current value. Since the calculated distribution current for the first battery cluster is greater than the maximum allowable charging current, the first battery cluster selects the maximum allowable charging current as its target current value at the moment t. A current externally inputted to the first battery cluster is controlled based on the target current value. Since the calculated distribution current for the second battery cluster is less than the maximum allowable charging current, the second battery cluster selects the calculated distribution current as its target current value at the moment t, and a current externally inputted to the second battery cluster is controlled based on the target current value.

A target current value of the energy storage system when the operation state of the energy storage system is "charging and being in the voltage non-plateau region" is as illustrated in the following table:

| Endpoint value of the voltage plateau region | Charging and being in the voltage non-plateau region | | | | | | | |
|---|---|---|---|---|---|---|---|---|
| Starting SOC value of the voltage plateau region SOCtag1=0.2 | | | Maximum real-time SOC | Maximum voltage (mV) | Current value at the previous moment (A) | Adjustment amount of current (A) | Maximum allowable charging current (A) | Target current value (A) |
| Ending SOC value of the voltage plateau region SOCtag2=0. 88 | Total current inputted from the outside to the energy | First battery cluster | 0.9 | 3410 | 100 | 0 | 140 | 100 |
| | | Second battery cluste | 0.92 | 3550 | 100 | 2.3 | 140 | 97.7 |
| Kp=0.03 Ki=0.001 Kd=0.002 The voltage difference threshold is 50mV | storage system at the moment t-1: 400A | r | | | | | | |
| | Total current inputted from the outside to the energy storage system at the mome nt t: 280A | First battery cluster | 0.91 | 3450 | 100 | 0 | 140 | 100 |
| | | Second battery cluster | 0.93 | 3560 | 97.7 | 1.9 | 140 | 95.8 |

By detecting the maximum real-time SOC of each battery cluster in the energy storage system in the charging state and comparing the maximum real-time SOC to the ending SOCtag2 value of the voltage plateau region, in response to both the maximum real-time SOCs of the two battery clusters at the moment t-1 and the moment t being less than the ending SOCtag2 value of the voltage plateau region, it can be seen that the two battery clusters at the two moments are both in the voltage non-plateau region.

At the moment t-1, an average value of the maximum cell voltages in the two battery clusters is subtracted from the maximum cell voltages in the two battery clusters, and this difference is then compared to the voltage difference threshold. When the difference exceeds the predetermined voltage difference threshold, the current adjustment is performed on the battery cluster. The average value of the maximum cell voltages of the two battery clusters is 3480mV. The maximum cell voltage of the first battery cluster, when compared to the average value, is less than the average value, whereas the maximum cell voltage of the second battery cluster, when compared to the average value, has a difference of 70mV from the average value. This difference exceeds the voltage difference threshold (50mV). Therefore, the current adjustment is only performed on the second battery cluster at the moment t-1, without the need to perform the current adjustment on the first battery cluster. As for an adjustment amount of current of the second battery cluster, the maximum cell voltages of the two battery clusters are inputted into the formula to calculate the adjustment amount of current. This calculation ultimately determines the target current of the second battery cluster.

At the moment t, the average value of the maximum cell voltages in the two battery clusters is subtracted from the maximum cell voltages in the two battery clusters, and this difference is then compared to the voltage difference threshold. When the difference exceeds the predetermined voltage difference threshold, the current adjustment is performed on the battery cluster. The average value of the maximum cell voltages of the two battery clusters is 3505mV. The maximum cell voltage of the first battery cluster, when compared to the average value, is less than the average value, whereas the maximum cell voltage of the second battery cluster, when compared to the average, has a difference of 55mV from the average. This difference exceeds the voltage difference threshold (50mV). Therefore, the current adjustment is only performed on the second battery cluster at the moment t, without the need to perform the current adjustment on the first battery cluster. As for the adjustment amount of current of the second battery cluster, the maximum cell voltages of the two battery clusters are inputted into the formula to calculate the adjustment amount of current. This calculation ultimately determines the target current of the second battery cluster.

Fourth embodiment

When the energy storage system is in the discharging process, the battery cluster quickly enters the plateau region and stays in the voltage non-plateau region from SOCtag2 to 1 for a short time. In addition, as the discharging process continues, the internal voltage of the battery cluster keeps decreasing until the battery cluster has the minimum real-time SOC less than SOCtag1 and enters the voltage non-plateau region. Therefore, in this embodiment, during the discharging, the comparison between SOCmin and SOCtag1 is used as a basis for determining whether the system is in the voltage plateau region or the voltage non-plateau region.

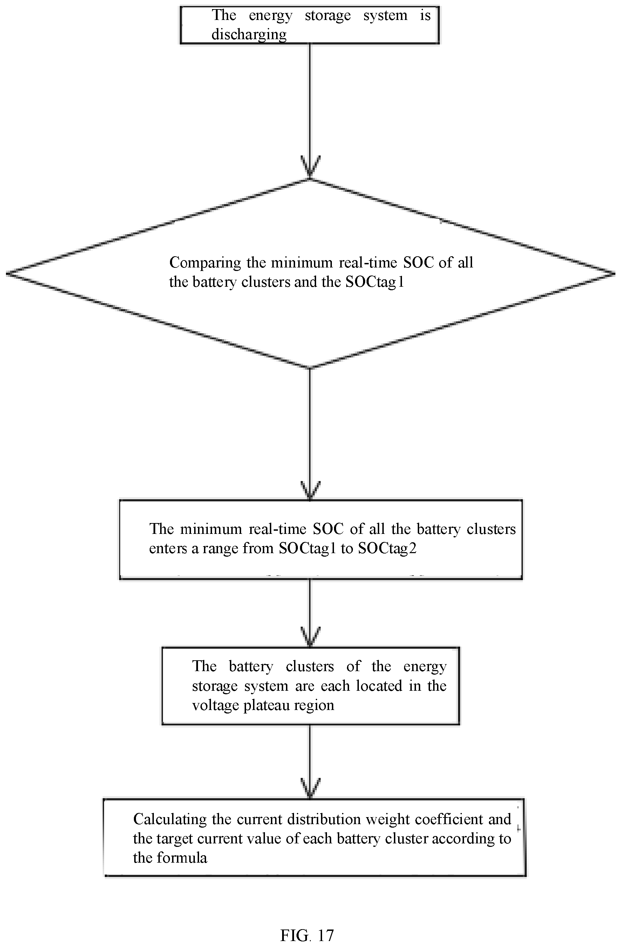

In this embodiment, as illustrated in FIG. 17, the minimum real-time SOC of all the battery clusters, i.e., SOCmin, enters a range from SOCtag1 to SOCtag2 when the energy storage system is in a discharging process, where SOCtag1≤SOCmin≤SOCtag2, i.e., the battery clusters of the energy storage system are both in the voltage plateau region. An adjustment current of each battery cluster is calculated by the following formula:

$$I_i = \min\{x_i * I_{total}, I_{i\ \text{maximum allowable discharging current}}\}$$

where $I_i$ · represents a target current value of each battery cluster, $x_i$ represents a cluster-current distribution weight coefficient of each battery cluster, and $I_{total}$ represents a total current outputted outwards by the energy storage system to an external load. The cluster-current distribution weight coefficient $x_i$ is calculated by the following formula:

$$x_i = \frac{(MinSoc_i - Soc_{tag1}) * Cap_i}{\sum_i^n((MinSoc_i - Soc_{tag1}) * Cap_i)}$$

where $MinSoc_i$· represents a minimum real-time SOC of each battery cluster, and $Cap_i$ represents a nominal capacity of each battery cluster at a current temperature.

Fifth embodiment

An adjustment method for an energy storage system of this embodiment optimizes and improves the method in the fourth embodiment. The optimization lies in that a total current $I_{total}^t$ outputted outwards by the energy storage system to an external load used in calculation of the target current value $I_i \cdot$ of each battery cluster is a sum of the adjusted target current values of the battery clusters at the previous moment. The sum of the adjusted target current values of the battery clusters at the previous moment is taken as the total current outputted outwards by the energy storage system to the external load at the current moment, to realize reusing calculation of the result, which can improve calculation accuracy of the target current value and is beneficial to accurate energy distribution of the current outputted outwards. In addition, when the total current outputted outwards by the energy storage system to the external load is large, the target current value calculated according to the cluster-current distribution weight coefficient of each battery cluster exceeds the maximum allowable discharging current of each battery cluster. Even after taking the smaller value, a current of each battery cluster is still the maximum allowable discharging current, which makes it impossible to reduce a consistency difference between clusters by adjusting the current of each battery cluster. Therefore, the sum of the adjusted target current values of the battery clusters at the previous moment is selected as the total current outputted outwards by the energy storage system to the external load at the current moment, which can better achieve a purpose of the balancing adjustment of the energy storage system.

That is, the target current value $I_i \cdot$ of each battery cluster is calculated by the following formula:

$$I_i = \min\{x_i * I_{total}^t ; I_{i \; maximum \; allowable \; charging \; current}\}$$

where $I_{total}^t$ represents the total current outputted outwards by the energy storage system to the external load at the current moment. The total current inputted to the energy storage system at the current moment is calculated by the following formula:

$$I_{total}^t = \Sigma I_i^{t-1}$$

where $I_i^{t-1}$ represents an adjusted target current value of each battery cluster at the previous moment.

Sixth embodiment

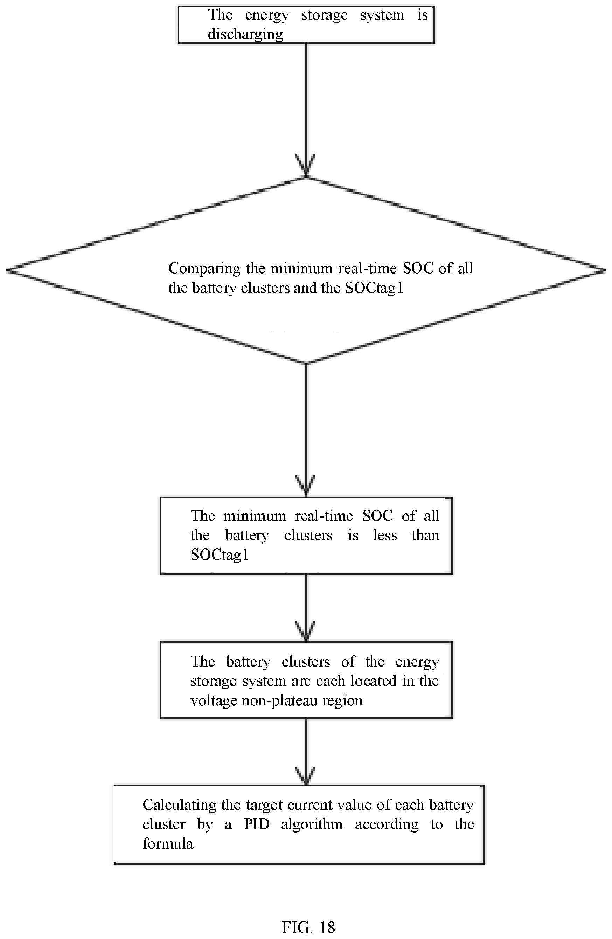

In this embodiment, as illustrated in FIG. 18, when the energy storage system is in a discharging process, and when the minimum real-time SOC of all the battery clusters, i.e., SOCmin, is less than SOCtagl, where 0<SOCmin<SOCtag1, i.e., each of the battery clusters of the energy storage system is in the voltage non-plateau region, a minimum cell voltage of each battery cluster and an average value of the minimum cell voltages of all the battery clusters are compared. In response to a difference between a minimum cell voltage of a battery cluster and the average value of the minimum cell voltages of all the battery clusters exceeding a predetermined voltage difference threshold, a current adjustment is performed on the battery cluster; otherwise, no current adjustment is performed on the battery cluster.

In a process of performing the adjustment current of the battery cluster as responding to the difference between the minimum cell voltage of the battery cluster and the average value of the minimum cell voltages of all the battery clusters exceeding the predetermined voltage difference threshold, an adjustment current of the battery cluster is calculated by the following formula:

$$MinVolt_{avg} = \frac{\sum MinVolt_i}{i}$$

$$err_t^i = MinVolt_{avg} - MinVolt_t^i$$

$$\delta I_t^i = K_p err_t^i + K_i \int err_t^i + K_d \frac{derr_t^i}{dt}$$

$$I_t^i = \min\{I_{t-1}^i - \delta I_t^i, I_{i \; maximum \; allowable \; discharging \; current}\}$$

where **MinVolt$_i$** represents the minimum cell voltage of each battery cluster, i represents a quantity of battery clusters, **MinVolt$_{avg}$**· represents the average voltage of the minimum cell voltages of all the battery clusters, $\delta I_t^i$· represents the amount of current needing to be adjusted in a current cycle, **K$_p$**· represents a proportional adjustment coefficient, **K$_i$** represents an integral adjustment coefficient, **K$_d$**· represents a differential adjustment coefficient, $I_{t-1}^i$· represents a target current value in a previous cycle, and $I_t^i$· represents a target current value in the current cycle.

An integral adjustment term $\int err_t^i$· is removed during calculation of the amount of current needing to be adjusted $\delta I_t^i$· in the current cycle under any one of the following conditions including: the minimum cell voltage of the adjusted battery cluster being higher than a difference between an average voltage of minimum voltages of all the battery clusters and the predetermined voltage difference threshold; a switch in a current operation state (the current operation state of the battery cluster generally includes a resting state, a charging state, and a discharging state, the switch in the current operation state here refers to a change of the current operation state of the battery cluster from the discharging state to the charging state or a change of the current operation state of the battery cluster from the discharging state to the resting state); an integration time for calculating $\delta I_t^i$· exceeding a predetermined adjustment step length; and a difference between an actual current value in the current cycle and the target current value $I_{t-1}^i$· in the previous cycle exceeding a predetermined range, that is, a significant difference occurs between the actual current value in the current cycle collected by a current collection unit and the target current value $I_{t-1}^i$· in the previous cycle, indicating that the current adjustment fails. As a result, the integral adjustment term is removed, and the amount of current needing to be adjusted $\delta I_t^i$· in the current cycle is recalculated.

The second embodiment and the third embodiment are described using an experimental example. In this experimental example, two battery clusters are provided in the energy storage system and have the same nominal capacity Cap. When the balancing adjustment is performed on the energy storage system of this experimental example, a targeted balancing adjustment is performed based on two operation states, which are an operation state of "discharging and being in the voltage plateau region" and an operation state of "discharging and being in the voltage non-plateau region".

A target current value of the energy storage system when the operation state of the energy storage system is "discharging and being in the voltage plateau region" is illustrated in the following table:

| Endpoint value of the voltage plateau region | Discharging and being in the voltage plateau region | | | | | | |
|---|---|---|---|---|---|---|---|
| Starting SOC value of the voltage plateau region SOCtag1=0.2 | | | Minimum real-time SOC | Current distribution weight coefficient | Distribution current (A) | Maximum allowable discharging current (A) | Target current value (A) |
| | Total current | First battery cluster | 0.4 | 0.4 | 160 | 140 | 140 |
| Ending SOC value of the voltage plateau region SOCtag2=0.88 | outputted outwards by the energy storage system to the external load at the moment t-1: 400A | Second battery cluster | 0.5 | 0.6 | 240 | 140 | 140 |

(continued)

| Endpoint value of the voltage plateau region | Discharging and being in the voltage plateau region | | | | | | |
|---|---|---|---|---|---|---|---|
| | Total current outputted outwards by the energy storage system to the external load at the moment t: 280A | First battery cluster | 0.38 | 0.41 | 114.8 | 140 | 114.8 |
| | | Second battery cluster | 0.46 | 0.59 | 165.2 | 140 | 140 |

By detecting the minimum real-time SOC of each battery cluster in the energy storage system in the discharging state and comparing the minimum real-time SOC to a starting SOCtag1 value of the voltage plateau region, in response to both the minimum real-time SOCs of the two battery clusters at the moment t-1 and the moment t being greater than the starting SOCtag1 value of the voltage plateau region, it can be seen that the two battery clusters at the two moments are both in the voltage plateau region.

At the moment t-1, the current distribution weight coefficient is calculated based on the minimum real-time SOC of each battery cluster and the starting SOCtag1 value of the voltage plateau region. Then, the distribution current is calculated according to the current distribution weight coefficient and the total current inputted from the outside to the energy storage system. The calculated distribution current is then compared to the maximum allowable discharging current of the battery cluster, and the smaller value is taken as the target current value. Since the distribution current calculated by two battery clusters is greater than their maximum allowable discharging current, the two battery clusters both select the maximum allowable discharging current as a target current value at the moment t-1, and a current externally inputted to each battery cluster is controlled based on the target current value.

At the moment t, the current distribution weight coefficient is calculated based on the minimum real-time SOC of each battery cluster and the starting SOCtag1 value of the voltage plateau region. Then, the distribution current is calculated according to a sum of the current distribution weight coefficient and the adjusted target current value of each battery cluster at the previous moment. The calculated distribution current is then compared to the maximum allowable discharging current of each battery cluster, and the smaller value is taken as the target current value. Since the calculated distribution current by the second battery cluster is greater than the maximum allowable discharging current, the second battery cluster selects the maximum allowable discharging current as its target current value at the moment t. A current externally inputted to the second battery cluster is controlled based on the target current value. Since the calculated distribution current by the first battery cluster is less than the maximum allowable discharging current, the first battery cluster selects the calculated distribution current as its target current value at the moment t, and a current externally inputted to the first battery cluster is controlled based on the target current value.

A target current value of the energy storage system when the operation state of the energy storage system is "discharging and being in the voltage non-plateau region" is as illustrated in the following table:

| Endpoint value of the voltage plateau region | Discharging and being in the voltage non-plateau region | | | | | | | |
|---|---|---|---|---|---|---|---|---|
| Starting SOC value of the voltage plateau region SOCtag1=0.2 | | | Minimum real-time SOC | Minimum voltage (mV) | Current value at the previous moment (A) | Adjustment amount of current (A) | Maximum allowable discharging current (A) | Target current value (A) |

(continued)

| Endpoint value of the voltage plateau region | Discharging and being in the voltage non-plateau region | | | | | | | |
|---|---|---|---|---|---|---|---|---|
| Ending SOC value of the voltage plateau region SOCtag2=0. 88 Kp=0.0 3 Ki=0.0 01 Kd=0.0 02 | Total curren t inputte d from the outsid e to the energy storag e system at the mome nt t-1: 400A | First batter y cluste r | 0.18 | 3010 | 100 | 2.1 | 140 | 97.9 |
| | | Second battery cluster | 0.19 | 3140 | 100 | 0 | 140 | 100 |
| The voltage difference threshold is 50mV | Total current inputted from the outside to the energy storage system at the moment t: 280A | First battery cluster | 0.17 | 3010 | 97.9 | 2 | 140 | 95.9 |
| | | Second battert cluster | 0.19 | 3129 | 100 | 0 | 140 | 100 |

By detecting the minimum real-time SOC of each battery cluster in the energy storage system in the discharging state and comparing the minimum real-time SOC to the starting SOCtag1 value of the voltage plateau region, in response to both the minimum real-time SOCs of the two battery clusters at the moment t-1 and the moment t being less than the starting SOCtag1 value of the voltage plateau region, it can be seen that the two battery clusters at the two moments are both in the voltage non-plateau region.

At the moment t-1, an average value of the minimum cell voltages in the two battery clusters is subtracted from each of the minimum cell voltages in the two battery clusters, and this difference is then compared to the voltage difference threshold. When the difference exceeds the predetermined voltage difference threshold, the current adjustment is performed on the battery cluster. The average value of the minimum cell voltages of the two battery clusters is 3075mV and is less than the minimum cell voltage of the second battery cluster when compared to the minimum cell voltage of the second battery cluster. Therefore, there is no need to perform the current adjustment on the second battery cluster. The average value of the minimum cell voltages of the two battery clusters is greater than the minimum cell voltage of the first battery cluster when compared to the minimum cell voltage of the first battery cluster and has difference of 65mV from the minimum cell voltage of the first battery cluster. This difference exceeds the voltage difference threshold (50mV). Therefore, the current adjustment is only performed on the first battery cluster at the moment t-1, without the need to perform the current adjustment on the second battery cluster. As for an adjustment amount of current of the first battery cluster, the minimum cell voltages of the two battery clusters are inputted into the formula to calculate the adjustment amount of current. This calculation ultimately determines the target current of the second battery cluster.

At the moment t, the average value of the minimum cell voltages in the two battery clusters is subtracted from each of the minimum cell voltages in the two battery clusters, and this difference is then compared to the voltage difference threshold. When the difference exceeds the predetermined voltage difference threshold, the current adjustment is performed on the battery cluster. The average value of the minimum cell voltages of the two battery clusters is 3069.5mV and is less than the minimum cell voltage of the second battery cluster when compared to the minimum cell voltage of the second battery cluster. Therefore, there is no need to perform the current adjustment on the second battery cluster. The average value of the minimum cell voltages of the two battery clusters is greater than the minimum cell voltage of the first battery cluster when compared to the minimum cell voltage of the first battery cluster and has difference of 59.5mV from the minimum cell voltage of the first battery cluster. This difference exceeds the voltage difference threshold (50mV). Therefore, the current adjustment is only performed on the first battery cluster at the moment t, without the need to perform the current adjustment on the second battery cluster. As for the adjustment amount of current of the first battery cluster, the minimum cell voltages of the two battery clusters are inputted into the formula to calculate the adjustment amount of current. This calculation ultimately determines the target current of the second battery cluster.

Seventh embodiment

This embodiment provides a computer medium executed with a data processing device. The data processing device has a processor including program code. The processor, when executing the program code, executes the balancing control method for the energy storage battery as described above according to any one of the first to sixth embodiments.

Eighth embodiment

This embodiment provides an energy storage system including a battery management unit and at least two battery clusters. The battery management unit is configured to execute the adjustment method for the energy storage system as described above according to any one of the first to sixth embodiments, to perform a balancing adjustment on the at least two battery clusters in the energy storage system.

Ninth embodiment

This embodiment provides a power generation system. The power generation system includes an energy storage system and a central control unit configured to execute the adjustment method for the energy storage system as described above according to any one of the first to sixth embodiments, to perform a balancing adjustment on a battery cluster in the energy storage system.

The energy storage battery refers to a battery that converts chemical energy into electrical energy and has an energy storage function. The energy storage battery may store the electrical energy within itself while charging and release the stored electrical energy when needed, to satisfy power demands. The energy storage battery has main application fields of power system energy storage, transportation energy storage, distributed energy storage, electronic device energy storage, and the like.

The energy storage battery is usually composed of a plurality of groups of battery packs, and the battery packs may be connected in series or parallel to form a battery group string. In a parallel connection mode, when there are too many groups of energy storage batteries connected in parallel, battery internal resistance of the battery pack will change after a long period of use. Because of different battery performance parameters of the battery pack, after long-term use, the batteries have significant differences between their internal resistance, leading to different electromotive forces. This results in a larger difference between the electromotive forces of the batteries, and the likelihood of these differences increases with more groups of batteries connected in parallel. In addition, a battery pack with a large electromotive force discharges electricity into a battery pack with a small electromotive force, forming a circulating current between the battery packs connected in parallel. A large circulation current will cause heat of the battery, accelerating aging of a battery with a large electromotive force and affecting a service life of the battery.

At present, a variety of solutions to a circulation current problem of the battery group string have emerged. However, due to varying capacities of new and old battery packs or varying capacities of different types of battery packs, battery packs forming the battery group easily occur significant aging differences and increased inconsistency during later use, which still affects the service life of the battery pack. With the aging of the battery pack when used, changes occur in the internal resistance of the battery due to factors such as water loss of an electrolyte, corrosions of an electrode plate and a connection belt, sulfuration of the electrode plate, and deformation and active material shedding of the electrode plate. Different battery packs may have different aging phenomena, leading to varying changes in internal resistance. These changes in internal resistance cause variations in temperature during the discharging of the battery pack, and an available capacity of the battery pack changes with the increase in temperature. Through a test, it is found that when the internal resistance of the battery pack is greater than 2 times its initial value (base value), the capacity of the battery pack will be less than 80% of its rated capacity. In addition, an increase in the internal temperature of the battery pack may further damage the battery, gradually reducing a cycle life and a maximum available capacity of the battery. According to the test, in an environment at a normal temperature of 25°C, in response to the temperature rising by 6 °C to 10 °C, the high temperature will increase a floating charge current of the battery, reducing the battery's service life by half. In other words, different internal temperatures of the battery packs may further exacerbate aging differences among the battery packs.

Since the internal resistance of the battery pack changes, the internal temperatures of the battery packs forming the energy storage battery will vary with a change in operation time. Correspondingly, the temperature change of the battery pack during the discharging may effectively reflect a health state and an operation condition of the battery pack, showing the consistency difference between the battery packs. Based on this, the applicant considers performing battery current sharing control based on the temperature of the battery pack, which further improves the current sharing control of the battery pack and controls the internal temperature of the battery pack to maintain a relatively uniform and balancing state.

Therefore, how to realize current sharing control and internal temperature control according to the state of each battery pack in the battery group is a technical problem to be solved by the present disclosure.

The embodiments of the present disclosure further provide a current sharing control method for an energy storage battery.

In this implementation, an energy storage battery composed of four battery packs is taken as an example. A capacity C1 of a battery pack 1 is 200AH. A capacity C2 of a battery pack 2 is 200AH. A capacity C3 of a battery pack 3 is 220AH. A capacity C4 of a battery pack 4 is 240AH.

A quantity of battery packs in the energy storage battery may be any natural number greater than or equal to 2. The principle of current sharing control calculation is the same as the principle for the case of four battery packs in this embodiment. It needs to be noted that further examples and illustrations are omitted here.

Standard definition of the battery state of health parameter SOH is a ratio of a capacity discharged by a power battery from a fully charged state at a predetermined rate to a cut-off voltage under standard conditions to a corresponding nominal capacity (actual initial capacity) of the power battery. This ratio is a reflection of a battery health condition. In simpler terms, it is a ratio of actual values of some directly measurable performance parameters or indirectly calculable performance parameters of the battery after a period of use to nominal values of the parameters. The ratio is used for assessing the battery state after the health of the battery has declined and measuring a battery health degree, which is actually reflected in changes in some internal parameters of the battery such as internal resistance and capacity. The battery state of health parameter SOH in this embodiment is defined and calculated from a perspective of the remaining battery power.

$$SOH = Qaged/Qnew$$

Where Qaged represents maximum power currently available to the battery pack, and Qnew represents maximum power of the battery pack when unused.

During the operation of the energy storage battery, monitoring of the voltage and current performed on each battery pack occurs, realizing detection and calculation of the maximum available power Qaged of the battery pack. In addition, the maximum power Qnew of the battery pack when unused is a factory parameter and is known. Therefore, the battery state of health parameter SOH can be obtained relatively easily from the prior art.

In this embodiment, a battery state of health parameter SOH1 of the battery pack 1 is 90%, a battery state of health parameter SOH2 of the battery pack 2 is 85%, a battery state of health parameter SOH3 of the battery pack 3 is 80%, and a battery state of health parameter SOH4 of the battery pack 4 is 80%.

The battery state of charge parameter SOC refers to the state of charge of the battery pack, is mainly used for reflecting the remaining capacity of the battery pack, is a real-time change value, and is numerically defined as a ratio of the remaining capacity of the battery pack to the capacity of the battery pack. The battery state of charge parameter SOC is commonly expressed as a percentage, with a range from 0 to 1. When SOC=0, it means that the battery pack is fully discharged. When SOC=1, it means that the battery is fully charged. The battery state of charge parameter SOC is generally measured through a battery terminal voltage. Currently, for state monitoring of the energy storage battery, monitoring of the battery state of charge parameter SOC is usually configured.

First embodiment

This embodiment describes a current sharing control method for an energy storage battery. The method is implemented to perform current sharing control on a plurality of groups of battery packs. Each of the plurality of groups of battery packs is connected in parallel to form a battery group. The selected battery packs have the same output voltage to avoid the circulation current problem during initial output. The method includes the following steps.

At step S1, a capacity Ci, a battery state of health parameter SOHi, and a battery state of charge parameter SOCi of each battery pack i are read subsequent to the energy storage battery system starting discharging. In this embodiment, i is a natural number ranging from 1 to 4, but it is not limited to this range. i may be expanded to any natural number equal to or greater than 10.

At step S3, a discharging current Current(sys) required by an electrical load connected to the battery group is determined.

At step S5, a proposed output current Current(i) of each battery pack is calculated according to the capacity Ci, the battery state of health parameter SOHi, the battery state of charge parameter SOCi of each battery pack i, and the discharging current Current(sys) required by the electrical load connected to the battery group through a specific calculation formula as follows:

$$\text{Current}(i) = \frac{(SOC_i \times SOH_i \times C_i)}{\sum_{i=1}^{N} (SOC_i \times SOH_i \times C_i)} \times \text{Current}(sys)$$

.

At step S7, an output current of each battery pack is controlled according to the calculated proposed output current Current(i) of each battery pack.

In this embodiment, at a moment of performing current sharing control, a battery state of charge parameter SOC1 of the battery pack 1 is 70%, a battery state of charge parameter SOC2 of the battery pack 2 is 68%, a battery state of charge parameter SOC3 of the battery pack 3 is 69%, and a battery state of charge parameter SOC4 of the battery pack 4 is 70%. The discharging current Current(sys) required by the electrical load is 100A.

According to the calculation formula of the proposed output current Current(i), the calculated proposed output current Current(i) of each battery pack is as follows:

|  | Capacity C (AH) | Battery state of health parameter SOH | Battery state of charge parameter SOC | Proposed output current (A) |
|---|---|---|---|---|
| Battery pack 1 | 200 | 90% | 70% | 25.33 |
| Battery pack 2 | 200 | 85% | 68% | 23.24 |
| Battery pack 3 | 220 | 80% | 69% | 24.41 |
| Battery pack 4 | 240 | 80% | 70% | 27.02 |

The output current of each battery pack is controlled according to the calculated proposed output current Current(i) of the battery pack, i.e., a proposed output current Current(1) corresponding to the battery pack 1 is 25.33A, a proposed output current Current(2) corresponding to the battery pack 2 is 23.24A, a proposed output current Current(3) corresponding to the battery pack 3 is 24.41A, and a proposed output current Current(4) corresponding to the battery pack 4 is 27.02A.

Performing control on the proposed output current Current(i) of each battery pack is realized by adjusting the internal resistance of the battery pack. Programmable logic resistors are connected in series on an output circuit of each battery pack and each accept control instructions outputted by an energy storage converter, a battery controller, and the like to adjust the resistance, thereby adjusting a branch circuit connected in series with the corresponding battery pack to the proposed output current.

Alternatively, performing control on the proposed output current Current(i) of each battery pack is realized by adjusting the output voltage of the battery pack. For example, it is realized by performing voltage conversion inside each battery pack. A direct current conversion module is connected in series with an interior of each battery pack. A branch circuit voltage is adjusted by the output voltage of the battery pack via the direct current conversion module, so that the output current of the corresponding branch circuit changes.

The above calculation for the proposed output current Current(i) of the battery pack may be completed in control devices such as the energy storage converter and the battery controller, or the calculation for the proposed output current Current(i) of the battery pack may be completed in an external computer or other computing devices, and control for a specific branch circuit current may be completed by a controller capable of transmitting control instructions to the battery pack, such as an energy storage converter or a battery controller, to realize the control for the output current on the branch circuit of each battery pack.

Second embodiment

A current sharing control method for an energy storage battery of this embodiment is improved on the basis of the first embodiment. The improvement lies in that subsequent to collecting an internal temperature Ti of each battery pack in step S1, configuring a temperature threshold coefficient Tavg, and completing calculation of the proposed output current Current(i) of each battery pack, an output control current Current'(i) is formed through a secondary adjustment according to the internal temperature Ti of the battery pack and the temperature threshold coefficient Tavg.

That is, the current sharing control method for the energy storage battery of this embodiment calculates and controls the output current of each battery pack according to the SOC, SOH, and capacity of each battery pack forming the energy storage battery, thereby realizing the current sharing control for each battery pack. In addition, the temperature in each battery pack is monitored, since a change in temperature rise of the battery pack temperature may effectively reflect an operation stability degree of the battery pack (a state of health of the battery). In combination with the temperature monitoring results, the output current of each battery pack is re-calculated and re-adjusted, achieving further current sharing control. In this way, a circulation current problem generated after the battery packs are connected in parallel can be eliminated. In addition, aging convergence control of each battery pack can be realized by monitoring the temperatures of the battery packs with the use of the current sharing control method, to reduce the consistency difference between the battery packs and prolong the service life of the whole energy storage battery.

In an implementation, subsequent to collecting the internal temperature Ti of each battery pack in step S1, configuring the temperature threshold coefficient Tavg, and completing the calculation of the proposed output current Current(i) of each battery pack, the output control current Current'(i) is formed through the secondary adjustment according to the internal temperature Ti of the battery pack and the temperature threshold coefficient Tavg. Through a change in the internal temperature Ti of each battery pack, in response to a temperature change value of a certain battery pack being greater than or equal to a temperature difference threshold t, the output current of the battery pack is calculated and adjusted. The temperature difference threshold t ranges from 2°C to 10°C.

In a further implementation, the method further includes step S2 of reading a maximum Tmax and a minimum Tmin of the internal temperature Ti of the battery pack collected during monitoring, and calculating a difference between the maximum Tmax and the minimum Tmin as a temperature change value of the battery pack. In this embodiment, the temperature difference threshold t is set to 4°C. When the temperature change value inside the battery pack is greater than 4°C, a control mechanism based on the internal temperature of the battery pack is introduced.

Then, in step S6, in a process of forming the output control current Current'(i) through the secondary adjustment according to the internal temperature Ti of the battery pack and the temperature threshold coefficient Tavg, a calculation formula of the output control current Current'(i) is as follows:

$$\textbf{Current}'(\textbf{i}) = \left(1 - \frac{\textbf{T}_i - \textbf{T}_{avg}}{\textbf{T}_{avg}}\right) \times \textbf{Current}(\textbf{i})$$

The temperature threshold coefficient Tavg is an average value of temperatures of battery packs, i.e.,

$$\textbf{Tavg} = \frac{\sum_{i=1}^{N} \textbf{Ti}}{\textbf{N}}$$

In this embodiment, after a period of operation, temperature detection statistics of each battery pack are as follows:

| | Minimum temperature Tmin (°C) | Maximum temperature Tmax (°C) | Temperature change value (°C) |
|---|---|---|---|
| Battery pack 1 | 30 | 32.5 | 2.5 |
| Battery pack 2 | 29 | 33 | 4 |
| Battery pack 3 | 30 | 32.5 | 2.5 |
| Battery pack 4 | 30.5 | 33 | 1.5 |

It can be found that a temperature change value inside the second battery pack is greater than 4°C, and calculation of the output control current of the second battery pack needs to be performed.

At this time, the temperature threshold coefficient Tavg is equal to 32.75°C, and Current (2) calculated from the first embodiment is 23.24A. In this way, the output control current Current'(2) of the second battery pack is calculated by inputting these values.

$$\mathbf{Current'(2)} = \left(1 - \frac{T_2 - T_{avg}}{T_{avg}}\right) \times \mathbf{Current(2)}$$

$$= \left(1 - \frac{33 - 32.75}{32.75}\right) \times 23.24$$

$$= 23.06$$

To sum up, it can be seen that the output control current corresponding to the adjusted second battery pack is 23.06A.

After the output control current Current'(i) of the battery pack is determined, the output current Current'(i) of the battery pack is controlled by adjusting internal resistance of the battery pack. For example, programmable logic resistors are connected in series on an output circuit of each battery pack and each accept control instructions outputted by an energy storage converter, a battery controller, and the like to adjust the reisitance, thereby adjusting a branch circuit connected in series with the corresponding battery pack to the proposed output current.

Alternatively, performing control on the output current Current'(i) of each battery pack is realized by adjusting the output voltage of the battery pack. For example, it is realized by performing voltage conversion inside each battery pack. A direct current conversion module is connected in series with an interior of each battery pack. A branch circuit voltage is adjusted by the output voltage of the battery pack via the direct current conversion module, so that the output current of the corresponding branch circuit changes.

The above calculation for the output current Current'(i) of the battery pack may be completed in control devices such as the energy storage converter and the battery controller, or the calculation for the output current Current'(i) of the battery pack may be completed in an external computer or other computing devices, and control for a specific branch circuit current may be completed by a controller capable of transmitting control instructions to the battery pack, such as an energy storage converter or a battery controller, to realize the control for the output current on the branch circuit of each battery pack.

Third embodiment

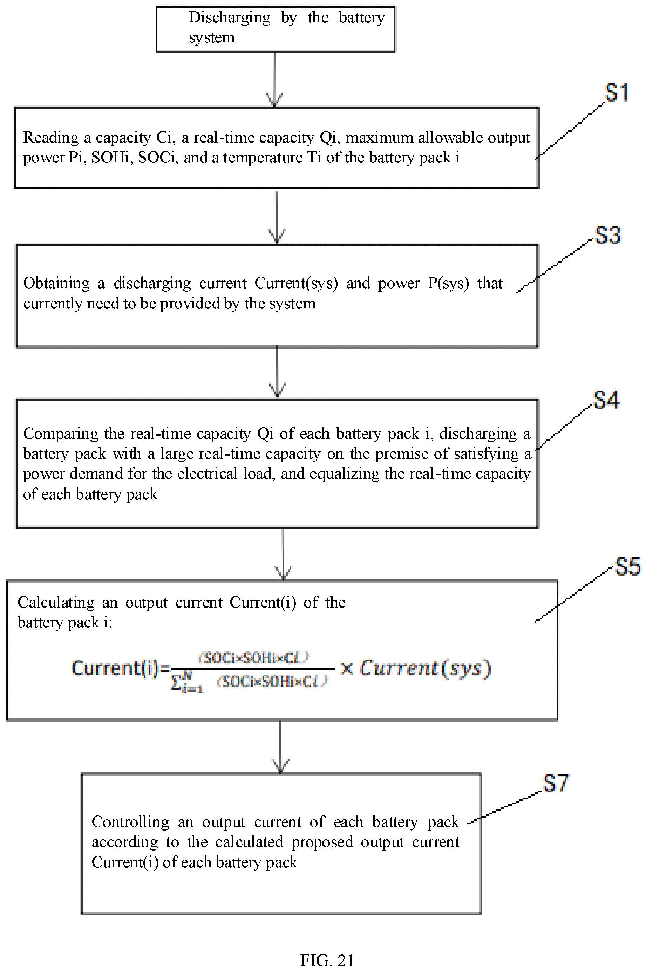

A current sharing control method for an energy storage battery of this embodiment is improved on the basis of the first embodiment or the second embodiment. As illustrated in FIG. 21, the improvement lies in that: step S1 further includes reading a real-time capacity Qi and maximum allowable output power Pi of each battery pack i, and step S3 further includes determining power P(sys) required by the electrical load connected to the battery group. The method further includes step S4 of comparing the real-time capacity Qi of each battery pack i, discharging a battery pack with a large real-time capacity on the premise of satisfying a power demand for the electrical load, and calculating the proposed output current Current(i) of each battery pack subsequent to the real-time capacity of each battery pack is balanced.

Due to differences in capacities of the battery packs, available capacities of the battery packs will vary after completing the charging. Alternatively, differences in states of health of the battery packs can lead to variations in their real-time capacities after placing or discharging of the battery packs for a period of time. Occurrence of circulation currents may be easily caused between the battery packs with differences. For example, it is possible to better avoid the occurrence of circulating currents by normalizing the available capacities of the battery packs, i.e., after the available capacities of the battery packs are made more consistent. On this basis, further controlling discharging currents of the battery pack based on their states of health in a targeted manner can better make the aging of the battery packs consistent, further preventing the occurrence of circulation currents.

An energy storage battery composed of four battery packs is taken as an example. A capacity C1 of a battery pack 1 is 200AH. A capacity C2 of a battery pack 2 is 200AH. A capacity C3 of a battery pack 3 is 220AH. A capacity C4 of a battery pack 4 is 240AH. After the formed energy storage battery is fully charged, actual available capacities of the battery packs are as follows. An available capacity Q1 of the battery pack 1 is 195AH. An available capacity Q2 of the battery pack 2 is 198AH. An available capacity Q3 of the battery pack 3 is 210AH. An available capacity Q4 of the battery pack 4 is 220AH. Maximum allowable output power of each battery pack is described below. Maximum allowable output power P1 of the battery pack 1 is 2KW. Maximum allowable output power P2 of the battery pack 2 is 2.5KW. Maximum allowable output power P3 of the battery pack 3 is 2.5KW. Maximum allowable output power P4 of the battery pack 4 is 3KW.

The above battery packs are ranked in descending order according to their real-time capacities and are respectively controlled to successively output current in a state lower than or equal to the maximum allowable output power according to the arranged order, i.e., a discharging order is the battery pack 4, the battery pack 3, the battery pack 2, and finally the battery pack 1.

When the power P(sys) required by the electrical load connected to the battery group is 3KW, power is directly supplied only by the battery pack 4 until a real-time capacity of the battery pack 4 reaches equal to the available capacity Q1 of the battery pack 1. When continued power supply is required, the power will switch to be supplied by the battery pack 2. However, since the maximum allowable output power P2 of the battery pack 2 is 2.5KW, which is less than power of 3KW required by the electrical load and cannot satisfy a power demand for the electrical load, the battery pack 3 will also supply power. The battery pack 2 supplies power at its maximum allowable output power P2, and the rest of the power is supplied by battery pack 3, until the real-time capacity of the battery pack 2 reaches equal to the available capacity Q1 of the battery pack 1. Then, the power will switch to be supplied by the battery pack 3. However, the maximum allowable output power P3 of the battery pack 3 is 2.5KW, which is insufficient to satisfy the power demand for the electrical load. Therefore, the battery pack 3 is controlled to supply power with its maximum allowable output power P3, and the rest of the power (0.5KW) is equally shared and supplied by the battery pack 1, the battery pack 2, and the battery pack 4 together. This continues until the real-time capacities of all the four battery packs are equalized and each reach 195AH, achieving capacity balancing of the battery packs in the energy storage battery. The current sharing output control of the energy storage battery is further realized using the method described in the first embodiment or the second embodiment.

When the power P(sys) required by the electrical load connected to the battery group is 5KW, power is supplied by the battery pack 4 and the battery pack 3 together. At this time, the battery pack 4 outputs power at maximum allowable output power of 3KW, and the battery pack 3 outputs power at output power of 2KW, until the real-time capacity of the battery pack 4 drops to 195AH (the real-time capacity of the battery pack 1, which is also a lowest real-time capacity of a single battery pack in the energy storage battery). In this way, power supply is switched to be performed by the battery pack 3 and the battery pack 2 together, and both the battery pack 3 and the battery pack 2 have maximum allowable output power of 2.5KW, which just satisfies the power demand for the electrical load. When the battery pack 3 has the real-time capacity dropping to 195AH but still needs to supply power with output power of 5KW, the battery pack 2 operates at the maximum allowable output power of 2.5KW, and the rest of the power (2.5KW) is equally shared and supplied by the battery pack 1, the battery pack 3, and the battery pack 4, until the real-time capacities of the four battery packs are equalized and each reach 195AH, realizing the capacity balancing of the battery packs in the energy storage battery. The current sharing output control of the energy storage battery is further realized using the method described in the first embodiment or the second embodiment.

Fourth embodiment

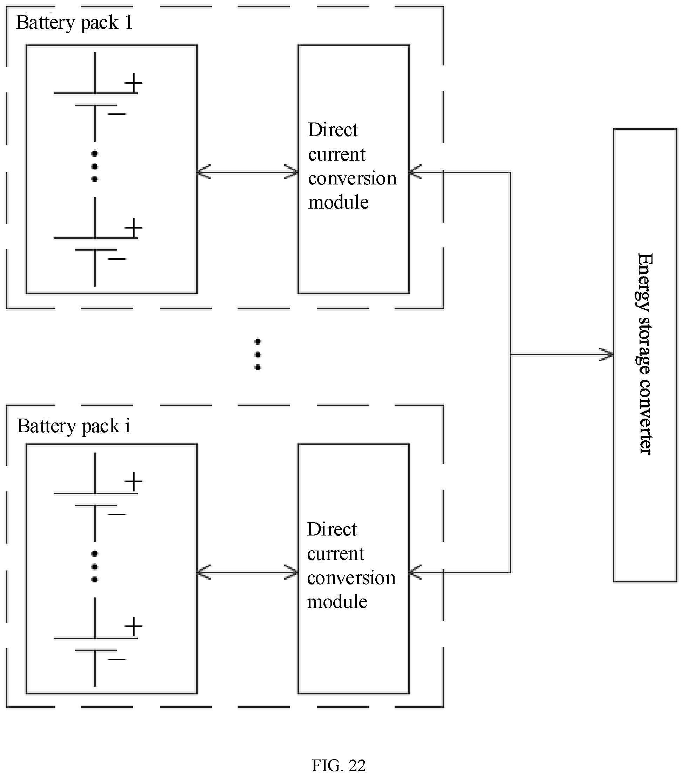

This embodiment describes a current sharing control system for an energy storage battery. As illustrated in FIG. 22, the energy storage battery includes a plurality of groups of battery packs connected in parallel. The plurality of groups of battery packs are connected to an energy storage converter after connected in parallel. The energy storage converter has an output end connected to an electrical load for supplying power to the electrical load. Each battery pack is internally provided with a direct current conversion module connected to an output end of the battery pack and the energy storage converter. The energy storage converter is configured to determine a proposed output current Current(i) according to the current sharing control method for the energy storage battery in the first embodiment and control an output voltage of the direct current conversion module according to the proposed output current Current(i).

Fifth embodiment

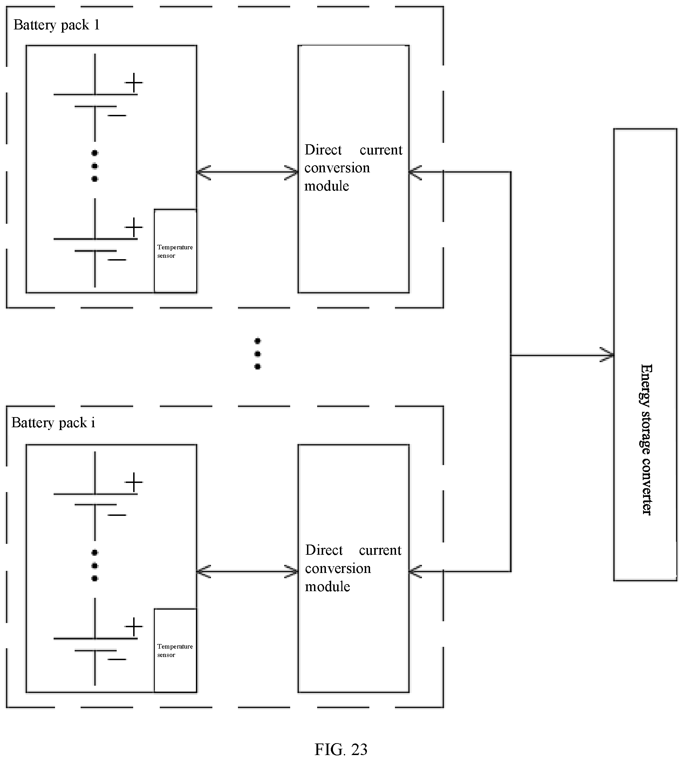

This embodiment describes a current sharing control system for an energy storage battery. As illustrated in FIG. 23, the energy storage battery includes a plurality of groups of battery packs connected in parallel. The plurality of groups of battery packs are connected to an energy storage converter after connected in parallel. The energy storage converter has an output end connected to an electrical load for supplying power to the electrical load. Each battery pack is internally provided with a direct current conversion module and a temperature sensor. The direct current conversion module is connected to an output end of the battery pack and the energy storage converter, and a data output end of the temperature sensor is connected to the direct current conversion module in the battery pack. The energy storage converter is configured to determine an output current Current'(i) according to the current sharing control method for the energy storage battery in the second embodiment and control an output voltage of the direct current conversion module according to a proposed output current Current(i).

The present disclosure further provides a computer medium executed with a data processing device. The data processing device has a processor including program code. The processor, when executing the program code, executes the current sharing control method for the energy storage battery as described above.

The current sharing control system for the energy storage battery, constructed based on the above method, has a simple overall architecture and may adapt to installation and mixed use of new and old battery packs or different types of battery packs, thereby reducing a workload of installation personnel.

It should be noted that, terms herein "comprise", "include" or any other variations thereof are meant to cover non-exclusive including, such that the process, method, article or device including a series of elements do not only include those elements, but also include other elements that are not explicitly listed, or also include inherent elements of the process, method, article or device. In a case that there are no more restrictions, an element qualified by the statement "comprises a ..." does not exclude the presence of additional identical elements in the process, method, article or device that includes the said element. In addition, it should be noted that the scope of the methods and devices in the implementations of the present disclosure are not limited to performing the functions in the order shown or discussed, and may also include performing the functions in a substantially simultaneous manner or in a reverse order according to the involved functions. For example, the described methods may be performed in an order different from the described order, and various steps may be added, omitted, or combined. In addition, features described with reference to some examples may be combined in other examples.

From the above description of the implementations, those skilled in the art may clearly understand that the methods of the above embodiments can be implemented by software and a necessary general hardware platform. Of course, the method can also be implemented by hardware, but the former is a preferred implementation in many cases. Based on such understanding, the technical solutions of the present disclosure essentially, or the part contributing to the related art may be embodied in a form of a software product. The computer software product is stored in a storage medium (such as ROM/RAM, a magnetic disk, and an optical disc), and includes several instructions for allowing a terminal (which may be a mobile phone, a computer, a server, or a network device) to execute methods described in the embodiments of the present disclosure.

The embodiments of the present disclosure have been described above with reference to the accompanying drawings, but the present disclosure is not limited to the above-described specific implementations, which are merely schematic and not restrictive, and those skilled in the art can make many forms under the inspiration of the present disclosure without departing from the purpose of the present disclosure and the scope of the claims, all of which fall within the protection of the present disclosure.

In the description of this specification, descriptions with reference to the terms "an embodiment", "some embodiments", "schematic embodiments", "examples", "specific examples", or "some examples", etc. mean that specific features, structure, materials, or characteristics described in conjunction with the embodiment or example are included in at least one embodiment or example of the present disclosure. In this specification, the schematic representations of the above terms do not necessarily refer to the same embodiment or example. Moreover, the described specific features, structures, materials or characteristics may be combined in any one or more embodiments or examples in a suitable manner.

Although the embodiments of the present disclosure have been shown and described above, it can be understood by those skilled in the art that various changes, modifications, replacements, and variations can be made to these embodiments without departing from the principles and ideas of the present disclosure. The scope of the present disclosure is defined by the claims as attached and their equivalents.

**Claims**

1.   A balancing control method for a battery cluster, the battery cluster comprising at least one PACK, each of the at least one PACK comprising at least one battery cell, the method comprising:

obtaining at least one of a first actual state of charge and an actual state of health of each of the at least one battery cell, and a second actual state of charge of each of the at least one PACK;
controlling, by a first balancing module based on at least one of the first actual state of charge and the actual state of health, at least one of state of charge balancing and state of health balancing of each of the at least one battery cell; and
controlling, by a second balancing module based on the second actual state of charge, state of charge balancing of the PACK,
wherein the first balancing module and the second balancing module are both connected to the PACK.

2.   The balancing control method for the battery cluster according to claim 1, wherein the first balancing module comprises a first sub-balancing module, said controlling, by the first balancing module based on at least one of the first actual state of charge and the actual state of health, at least one of the state of charge balancing and the state of health balancing of each of the at least one battery cell comprising:
in response to a difference between a first actual state of charge of a first target battery cell among the at least one battery cell and a first actual state of charge of a first lowest cell among the at least one battery cell being greater than a first predetermined value, adjusting the first sub-balancing module to perform state of charge balancing on the first target battery cell, wherein the first lowest cell is a battery cell with a lowest first actual state of charge among the at least one battery cell.

3. The balancing control method for the battery cluster according to claim 2, wherein the first sub-balancing module comprises at least one first switch and a first resistor, the at least one first switch being connected in parallel with the at least one battery cell in a one-to-one correspondence, and the first resistor being disposed between each of the at least one first switch and each of the at least one battery cell connected in parallel with the at least one first switch, wherein said adjusting the first sub-balancing module to perform state of charge balancing on the first target battery cell comprises:

controlling a first switch connected in parallel with the first target battery cell to be on; and
in response to the difference between the first actual state of charge of the first target battery cell and the first actual state of charge of the first lowest cell being less than a second predetermined value, controlling the first switch connected in parallel with the first target battery cell to be off, the second predetermined value being less than the first predetermined value.

4. The balancing control method for the battery cluster according to any one of claims 1 to 3, wherein the first balancing module comprises a second sub-balancing module, said controlling, by the first balancing module based on at least one of the first actual state of charge and the actual state of health, at least one of the state of charge balancing and the state of health balancing of each of the at least one battery cell comprising:
in response to a difference between an actual state of health of a first highest cell and an actual state of health of a second lowest cell being greater than a third predetermined value, adjusting the second sub-balancing module to perform state of health balancing on the second lowest cell, wherein the first highest cell is a battery cell with a highest actual state of health among the at least one battery cell, and wherein the second lowest cell is a battery cell with a lowest actual state of health among the at least one battery cell.

5. The balancing control method for the battery cluster according to claim 4, wherein the second sub-balancing module comprises at least one electromagnetic induction module arranged in a one-to-one correspondence with the at least one battery cell, each of the at least one electromagnetic induction module having a first end connected to a positive electrode of the battery cell, a second end connected to a negative electrode of the battery cell via a second resistor and a second switch that are connected in series, a third end connected to the positive electrode of the battery cell, and a fourth end connected to the negative electrode of the battery cell via a third resistor and a third switch that are connected in series,
wherein said adjusting the second sub-balancing module to perform state of health balancing on the second lowest cell comprises:
sequentially controlling the second switch and the third switch that correspond to the second lowest cell to be on.

6. The balancing control method for the battery cluster according to any one of claims 1 to 5, wherein said controlling, by the second balancing module based on the second actual state of charge, the state of charge balancing of the PACK comprises:
in response to a difference between a second actual state of charge of a first target PACK among the at least one PACK and a second actual state of charge of a lowest PACK among the at least one PACK being greater than a fourth predetermined value, adjusting the second balancing module to perform state of charge balancing on the first target PACK, wherein the lowest PACK is a PACK with a lowest second actual state of charge among the at least one PACK.

7. The balancing control method for the battery cluster according to claim 6, wherein the second balancing module comprises a fourth resistor and a fourth switch that are connected in series, the fourth resistor and the fourth switch that are connected in series being connected in parallel with the PACK,
wherein said adjusting the second balancing module to perform state of charge balancing on the first target PACK comprises:

controlling the fourth switch corresponding to the first target PACK to be on; and
controlling the fourth switch corresponding to the first target PACK to be off subsequent to a first target time length.

8. The balancing control method for the battery cluster according to claim 7, wherein the first target time length is determined by:
calculating the first target time length based on the second actual state of charge of the first target PACK, the second actual state of charge of the lowest PACK, a battery nominal capacity, a battery aging degree of the first target PACK, a voltage across the first target PACK, and resistance of the fourth resistor.

9. The balancing control method for the battery cluster according to claim 7, further comprising:

in response to a cell voltage of the at least one battery cell in the first target PACK being less than a sixth predetermined value, controlling a branch circuit where the fourth resistor and the fourth switch are located to be off, the fourth resistor and the fourth switch being connected in series and connected in parallel with the first target PACK.

10. The balancing control method for the battery cluster according to any one of claims 1 to 9, further comprising:
in response to an actual temperature of the second balancing module being greater than a fifth predetermined value, performing a heat dissipation operation on the second balancing module.

11. A balancing control apparatus for a battery cluster, the battery cluster comprising at least one PACK, each of the at least one PACK comprising at least one battery cell, the apparatus comprising:

a first processing module configured to obtain at least one of a first actual state of charge and an actual state of health of each of the at least one battery cell, and a second actual state of charge of each of the at least one PACK;
a second processing module configured to control, by a first balancing module based on at least one of the first actual state of charge and the actual state of health, at least one of state of charge balancing and state of health balancing of each battery cell; and
a third processing module configured to control, by a second balancing module based on the second actual state of charge, state of charge balancing of the PACK,
wherein the first balancing module and the second balancing module are both connected to the PACK.

12. A system based on the balancing control method for the battery cluster according to any one of claims 1 to 10, comprising:

a battery management unit;
a first balancing module connected to the battery management unit and the PACK; and
a second balancing module connected to the battery management unit and the PACK.

13. The system according to claim 12, wherein the first balancing module comprises at least one of a first sub-balancing module and a second sub-balancing module, wherein:

the first sub-balancing module is integrated within the battery management unit; and
the second sub-balancing module is integrated within the PACK or disposed outside the system.

14. The system according to claim 12 or 13, wherein when the second balancing module comprises the fourth resistor and the fourth switch that are connected in series, and the fourth resistor and the fourth switch, which are connected in series, are connected in parallel with the PACK, the second balancing module further comprises:

a fifth switch connected in series with the fourth switch; and
a voltage protection circuit electrically connected to the PACK and the fifth switch, the voltage protection circuit being configured to control an on/off state of the fifth switch based on a cell voltage of each battery cell in the PACK.

15. The system according to any one of claims 12 to 14, wherein the second balancing module further comprises:

a temperature sensor configured to collect an actual temperature of the second balancing module; and
a heat dissipation device connected to a positive electrode of a PACK corresponding to the second balancing module, an on/off state of the heat dissipation device being controlled based on the actual temperature.

Obtaining at least one of a first actual state of charge and an actual state of health of each of the at least one battery cell, and a second actual state of charge of each of the at least one PACK — 110

Controlling, by a first balancing module based on at least one of the first actual state of charge and the actual state of health, at least one of state of charge balancing and state of health balancing of each battery cell — 120

Controlling, by a second balancing module based on the second actual state of charge, state of charge balancing of the PACK — 130

FIG. 1

FIG. 2

```
┌─────────────────────────────────┐
│              Start              │
└─────────────────────────────────┘
                 │
                 ▼
┌─────────────────────────────────┐
│ Obtaining a SOHn of the battery cell │◄──┐
└─────────────────────────────────┘    │
                 │                      │
                 ▼                      │
┌─────────────────────────────────┐    │
│ Calculating a difference between the │    │
│ SOHn of the battery cell and a MinSOH │    │
└─────────────────────────────────┘    │
                 │                      │
                 ▼                      │
            ◇─────────◇                 │
       The difference > a        N      │
       predetermined value C_1 ─────────┘
            ◇─────────◇
                 │ Y
                 ▼
┌─────────────────────────────────┐
│   A first balancing module B operates │
└─────────────────────────────────┘
                 │
                 ▼
┌─────────────────────────────────┐
│  Closing when the system is not in │
│            operation            │
└─────────────────────────────────┘
```

FIG. 3

Start

Obtaining a SOCPn of the PACK

Sorting the SOCPn

Calculating a difference between the SOCPn of the PACK and a minimum SOCPn

The difference $>$ a predetermined value $B_1$ — N

Y

Calculating an operation time $T_1$ of a second balancing module of each PACK

The second balancing module operates

Activating a fan ← N — A module temperature $<T_B$

Y

Reaching a balancing time T1 — N

End

FIG. 4

FIG. 5

FIG. 6

FIG. 7

FIG. 8

FIG. 9

FIG. 10

FIG. 11

FIG. 12

```
            ┌─────────┐
            │  Start  │
            └─────────┘
                 │
                 ▼
    ┌────────────────────────────┐
    │ Calculating a slope of the OCV-SOC │
    │ curve                       │
    └────────────────────────────┘
                 │
                 ▼
         ╱───────────────────╲
        ╱  Determining whether the slope ╲
       ╱   is less than a predetermined   ╲
        ╲         threshold              ╱
         ╲───────────────────╱
                 │
                 ▼
    ┌────────────────────────────┐
    │ A point at which the slope starts to be │
    │ less than the threshold is taken as a │
    │ starting SOCtag1 of the voltage plateau │
    │ region                      │
    └────────────────────────────┘
                 │
                 ▼
    ┌────────────────────────────┐
    │ Calculating the slope of the OCV-SOC │
    │ curve                       │
    └────────────────────────────┘
                 │
                 ▼
         ╱───────────────────╲
        ╱       Determining        ╲
       ╱  whether the slope is greater ╲
        ╲  than the predetermined      ╱
         ╲       threshold           ╱
          ╲───────────────────╱
                 │
                 ▼
    ┌────────────────────────────┐
    │ A point at which the slope starts to │
    │ be greater than the threshold is taken │
    │ as an ending SOCtag2 of the voltage │
    │ plateau region              │
    └────────────────────────────┘
                 │
                 ▼
    ┌────────────────────────────┐
    │ A region where the OCV-SOC curve is in a range │
    │ from 0 to SOCtag1 and from SOCtag1 to 1 is the │
    │ voltage non-plateau region, and a region where the │
    │ OCV-SOC curve is in a range from SOCtag1 to │
    │ SOCtag1 is the voltage non-plateau region │
    └────────────────────────────┘
```

FIG. 13

Obtaining a charging and discharging state of the energy storage system

The energy storage system is charging

The energy storage system is discharging

Comparing the maximum real-time SOC of all the battery clusters to SOCtag1 and SOCtag2

Comparing the minimum real-time SOC of all the battery clusters to SOCtag1 and SOCtag2

The maximum real-time SOC of all the battery clusters enters a range from SOCtag1 to SOCtag2

The maximum real-time SOC of all the battery clusters is greater than SOCtag2

The minimum real-time SOC of all the battery clusters enters a range from SOCtag1 to SOCtag2

The minimum real-time SOC of all the battery clusters is less than SOCtag1

Calculating the current distribution weight coefficient and the target current value of each battery cluster according to the formula

Calculating the target current value of each battery cluster by a PID algorithm according to the formula

Calculating the current distribution weight coefficient and the target current value of each battery cluster according to the formula

Calculating the target current value of each battery cluster by the PID algorithm according to the formula

FIG. 14

```
┌─────────────────────────────────┐
│ The energy storage system is    │
│ charging                        │
└─────────────────────────────────┘
                 │
                 ▼
          ╱─────────────╲
        ╱                 ╲
      ╱  Comparing the maximum real-time SOC of  ╲
      ╲  all the battery clusters and the SOCtag2 ╱
        ╲                 ╱
          ╲─────────────╱
                 │
                 ▼
┌─────────────────────────────────┐
│ The maximum real-time SOC of all the │
│ battery clusters enters a range from │
│ SOCtag1 to SOCtag2              │
└─────────────────────────────────┘
                 │
                 ▼
┌─────────────────────────────────┐
│ The battery clusters of the energy │
│ storage system are each located in │
│ the voltage plateau region       │
└─────────────────────────────────┘
                 │
                 ▼
┌─────────────────────────────────┐
│ Calculating the current distribution weight │
│ coefficient and the target current value of each │
│ battery cluster according to the formula │
└─────────────────────────────────┘
```

FIG. 15

The energy storage system is charging

Comparing the maximum real-time SOC of all the battery clusters and the SOCtag2

The maximum real-time SOC of all the battery clusters is greater than SOCtag2

The battery clusters of the energy storage system are each located in the voltage non-plateau region

Calculating the target current value of each battery cluster by a PID algorithm according to the formula

FIG. 16

The energy storage system is discharging

Comparing the minimum real-time SOC of all the battery clusters and the SOCtag1

The minimum real-time SOC of all the battery clusters enters a range from SOCtag1 to SOCtag2

The battery clusters of the energy storage system are each located in the voltage plateau region

Calculating the current distribution weight coefficient and the target current value of each battery cluster according to the formula

FIG. 17

The energy storage system is discharging

Comparing the minimum real-time SOC of all the battery clusters and the SOCtag1

The minimum real-time SOC of all the battery clusters is less than SOCtag1

The battery clusters of the energy storage system are each located in the voltage non-plateau region

Calculating the target current value of each battery cluster by a PID algorithm according to the formula

FIG. 18

Discharging by the battery system

S1

Reading a capacity Ci, SOHi, and SOCi of the battery pack i

S3

Obtaining a discharging current Current(sys) needing to be provided currently by the system

S5

Calculating an output current Current(i) of the battery pack i:

$$Current(i) = \frac{(SOCi \times SOHi \times Ci)}{\sum_{i=1}^{N} (SOCi \times SOHi \times Ci)} \times Current(sys)$$

S7

Controlling an output current of each battery pack according to the calculated proposed output current Current(i) of each battery pack

FIG. 19

Discharging by the battery system

Reading a capacity Ci, SOHi, SOCi, and a temperature Ti of the battery pack i — S1

Obtaining a discharging current Current(sys) needing to be provided currently by the system — S3

Calculating an output current Current(i) of the battery pack i:

$$Current(i) = \frac{(SOCi \times SOHi \times Ci)}{\sum_{i=1}^{N}(SOCi \times SOHi \times Ci)} \times Current(sys)$$

S5

S2 — Tmax-Tmin≥4℃   N

Y

Control of a temperature threshold coefficient Tavg

S6 — Calculating a temperature coefficient control current Current'(i):

$$Current'(i) = \left(1 - \frac{T_i - T_{avg}}{T_{avg}}\right) \times Current(i)$$

Controlling an output current of each battery pack according to the calculated proposed output current Current'(i) of each battery pack — S7

FIG. 20

Discharging by the battery system

**S1**

Reading a capacity Ci, a real-time capacity Qi, maximum allowable output power Pi, SOHi, SOCi, and a temperature Ti of the battery pack i

**S3**

Obtaining a discharging current Current(sys) and power P(sys) that currently need to be provided by the system

**S4**

Comparing the real-time capacity Qi of each battery pack i, discharging a battery pack with a large real-time capacity on the premise of satisfying a power demand for the electrical load, and equalizing the real-time capacity of each battery pack

**S5**

Calculating an output current Current(i) of the battery pack i:

$$Current(i) = \frac{(SOCi \times SOHi \times Ci)}{\sum_{i=1}^{N}(SOCi \times SOHi \times Ci)} \times Current(sys)$$

**S7**

Controlling an output current of each battery pack according to the calculated proposed output current Current(i) of each battery pack

FIG. 21

Battery pack 1

Direct current conversion module

Battery pack i

Direct current conversion module

Energy storage converter

FIG. 22

Battery pack 1

Temperature sensor

Direct current conversion module

Battery pack i

Temperature sensor

Direct current conversion module

Energy storage converter

FIG. 23

## INTERNATIONAL SEARCH REPORT

| | International application No. |
|---|---|
| | **PCT/CN2024/121959** |

| **A.** | **CLASSIFICATION OF SUBJECT MATTER** |
|---|---|

H02J7/00(2006.01)i;  H01M10/44(2006.01)i

According to International Patent Classification (IPC) or to both national classification and IPC

| **B.** | **FIELDS SEARCHED** |
|---|---|

Minimum documentation searched (classification system followed by classification symbols)

IPC:H02J,H01M

Documentation searched other than minimum documentation to the extent that such documents are included in the fields searched

Electronic data base consulted during the international search (name of data base and, where practicable, search terms used)

CNTXT; ENTXT; ENTXTC; DWPI; CNKI: 均衡, 电池簇, 电池包, 单体, 电芯, 开关, 最低电压, 最高电压; equalization, battery cluster, battery pack, single battery, switch, minimum voltage, lowest voltage, maximum voltage.

| **C.** | **DOCUMENTS CONSIDERED TO BE RELEVANT** | |
|---|---|---|

| Category* | Citation of document, with indication, where appropriate, of the relevant passages | Relevant to claim No. |
|---|---|---|
| PX | CN 118659491 A (SHANGHAI SIGEYUAN INTELLIGENT TECHNOLOGY CO., LTD.) 17 September 2024 (2024-09-17) <br> claims 1-15 | 1-15 |
| X | CN 109713740 A (BEIJING TIANSHI NEW ENERGY TECHNOLOGY CO., LTD.) 03 May 2019 (2019-05-03) <br> description, paragraphs 30-62, and figures 1-3C | 1, 10, 11, 12, 13, 15 |
| Y | CN 109713740 A (BEIJING TIANSHI NEW ENERGY TECHNOLOGY CO., LTD.) 03 May 2019 (2019-05-03) <br> description, paragraphs 30-62, and figures 1-3C | 2-10, 12-15 |
| Y | CN 116736165 A (SHENZHEN ECOFLOW INNOVATION TECHNOLOGY CO., LTD.) 12 September 2023 (2023-09-12) <br> description, paragraphs 54-178 | 2-10, 12-15 |
| Y | CN 114513030 A (SUNGROW ENERGY STORAGE TECHNOLOGY CO., LTD.) 17 May 2022 (2022-05-17) <br> description, paragraphs 65-102 | 3-10, 12-15 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **20 December 2024** | **25 December 2024** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2024/121959** |

**C.    DOCUMENTS CONSIDERED TO BE RELEVANT**

| Category* | Citation of document, with indication, where appropriate, of the relevant passages | Relevant to claim No. |
|---|---|---|
| A | KR 20160046221 A (LG CHEMICAL LTD.) 28 April 2016 (2016-04-28)<br>    entire document | 1-15 |

Form PCT/ISA/210 (second sheet) (July 2022)

**INTERNATIONAL SEARCH REPORT**
Information on patent family members

International application No.

**PCT/CN2024/121959**

| Patent document cited in search report | | | Publication date (day/month/year) | Patent family member(s) | | | Publication date (day/month/year) |
|---|---|---|---|---|---|---|---|
| CN | 118659491 | A | 17 September 2024 | None | | | |
| CN | 109713740 | A | 03 May 2019 | None | | | |
| CN | 116736165 | A | 12 September 2023 | None | | | |
| CN | 114513030 | A | 17 May 2022 | None | | | |
| KR | 20160046221 | A | 28 April 2016 | KR | 101746139 | B1 | 12 June 2017 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202410728047

- CN 202311275716